(19) **Europäisches Patentamt / European Patent Office / Office européen des brevets**

(11) **EP 4 651 456 A1**

(12) # EUROPEAN PATENT APPLICATION
published in accordance with Art. 153(4) EPC

(43) Date of publication:
**19.11.2025 Bulletin 2025/47**

(21) Application number: **24749646.6**

(22) Date of filing: **29.01.2024**

(51) International Patent Classification (IPC):
**H04L 41/0803** (2022.01)   **G06F 9/50** (2006.01)
**H04L 67/10** (2022.01)   **H04L 43/0852** (2022.01)
**G06F 9/455** (2018.01)

(52) Cooperative Patent Classification (CPC):
**H04L 67/10; G06F 9/45558; G06F 9/50;
G06F 9/505; G06F 9/5061; G06F 9/5072;
G06F 9/5077; G06F 9/5083; H04L 41/0803;
H04L 43/0852;** G06F 2009/45591;
G06F 2009/45595

(86) International application number:
**PCT/CN2024/074443**

(87) International publication number:
**WO 2024/160167 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 CN 202310064174**

(71) Applicant: **Huawei Cloud Computing
Technologies Co., Ltd.
Guiyang, Guizhou 550025 (CN)**

(72) Inventors:
• **DU, Tianlin
  Guiyang, Guizhou 550025 (CN)**
• **ZHU, Lei
  Guiyang, Guizhou 550025 (CN)**
• **ZHOU, Wenli
  Guiyang, Guizhou 550025 (CN)**
• **SU, Li
  Guiyang, Guizhou 550025 (CN)**

(74) Representative: **Körber, Martin Hans
Mitscherlich PartmbB
Patent- und Rechtsanwälte
Karlstraße 7
80333 München (DE)**

(54) **DEDICATED HOST CREATION METHOD AND RELATED DEVICE**

(57) This application discloses a dedicated host creation method. The method is applied to a cloud management platform, and includes: obtaining a first metric, where the first metric includes a first delay between dedicated hosts in a first dedicated host cluster; obtaining a second delay, where the second delay includes an actual delay between the dedicated hosts; generating a first condition based on the first delay and the second delay, where the first condition indicates a preset value relationship between the first delay and the second delay; and creating a second dedicated host cluster based on the first condition. In this way, a metric specified by a user can be applied to a dedicated host, to improve use experience of the user.

FIG. 5

**Description**

This application claims priority to Chinese Patent Application No. CN202310064174.3, filed with the China National Intellectual Property Administration on January 30, 2023, and entitled "DEDICATED HOST CREATION METHOD AND RELATED APPARATUS", which is incorporated herein by reference in its entirety.

**TECHNICAL FIELD**

This application relates to the field of cloud computing technologies, and in particular, to a dedicated host creation method and a related apparatus.

**BACKGROUND**

A dedicated host (Dedicated Host, DEH) is a service mode of cloud services. The dedicated host features exclusive use of physical resources, flexible deployment, and the like. A user can exclusively use resources on the dedicated host.

To improve use experience of a user and ensure that a created dedicated host can meet a user requirement, the user is allowed to specify a part of metrics of the dedicated host when creating the dedicated host. However, currently, only basic metrics such as types and a quantity of dedicated hosts can be generally specified by the user. A part of higher-level metrics specified by the user cannot be applied to the dedicated hosts.

**SUMMARY**

This application provides a dedicated host creation method and a related apparatus, to apply a metric specified by a user to a dedicated host, thereby improving use experience of the user.

According to a first aspect, this application provides a dedicated host creation method. The method includes: first obtaining a first metric, where the first metric includes a first delay between dedicated hosts in a first dedicated host cluster; then obtaining a second delay, where the second delay indicates an actual delay between the dedicated hosts; further generating a first condition based on the first delay and the second delay, where the first condition indicates a preset value relationship between the first delay and the second delay; and finally creating a second dedicated host cluster based on the first condition.

In this application, a metric specified by a user is converted into the first condition, and the second dedicated host cluster that meets a user requirement is created based on the first condition. This resolves a current problem that a part of higher-level metrics specified by the user cannot be applied to a dedicated host, and further improves use experience of the user. In addition, a main method for determining the first condition that needs to be met for creating the dedicated host is: after the actual second delay between the dedicated hosts and the first delay that needs to be met by the dedicated hosts and that is specified by the user are determined, determining the first condition based on the value relationship between the first delay and the second delay. In this method, the metric specified by the user is converted into a constraint condition that needs to be met for creating the dedicated host, so that the created dedicated host meets a specified user requirement, and a degree of control of the user on the dedicated host is enhanced.

In a possible implementation of the first aspect, the first delay includes a first average delay and a first maximum delay between the dedicated hosts, the second delay includes a second average delay and a second maximum delay between the dedicated hosts, and generating the first condition based on the first delay and the second delay includes:

   generating a second condition based on a preset value relationship between the first average delay and the second average delay;
   generating a third condition based on a preset value relationship between the first maximum delay and the second maximum delay; and
   combining the second condition and the third condition to generate the first condition.

In this possible implementation, to meet some metrics that the user expects the dedicated host to ensure in a subsequent service, for example, an average communication delay and a maximum communication delay between hosts in a dedicated host cluster, the first condition is constructed based on a value relationship between a delay entered by the user and the actual delay. In this way, a dedicated host that meets a condition is selected, and performance of the dedicated host is improved.

In a possible implementation of the first aspect, obtaining the second delay includes:

   obtaining a total quantity of the dedicated hosts and a delay between every two of the dedicated hosts;

determining the second maximum delay based on the delay between every two of the dedicated hosts; and
determining the second average delay based on the total quantity of the dedicated hosts and the delay between every two of the dedicated hosts.

In this possible implementation, the quantity of dedicated hosts and the actual delay are obtained, to determine an average delay and a maximum delay between the dedicated hosts, so as to select the dedicated host that meets the condition.

In a possible implementation of the first aspect, determining the second maximum delay based on the delay between every two of the dedicated hosts includes:

determining a maximum delay value from the delay between every two of the dedicated hosts, and determining the maximum delay value as the second maximum delay.

In this possible implementation, the delay between every two of the dedicated hosts is obtained by traversing all hosts in a current network, and a maximum value is selected from the delay between every two of the dedicated hosts as a maximum delay, to select the dedicated host that meets the condition.

In a possible implementation of the first aspect, determining the second average delay based on the total quantity of the dedicated hosts and the delay between every two of the dedicated hosts includes:

determining a quotient of a sum of the delay between every two of the dedicated hosts and the total quantity of the dedicated hosts as the second average delay.

In this possible implementation, the delay between every two of the dedicated hosts and the total quantity of the dedicated hosts in the current network are collected, and the sum of delay values is divided by the total quantity of the dedicated hosts, so that the average delay between the dedicated hosts can be obtained through calculation. In this way, an actual average communication delay corresponding to the first dedicated host cluster in the current network is obtained.

In a possible implementation of the first aspect, creating the second dedicated host cluster based on the first condition includes:

determining, from the first dedicated host cluster, a dedicated host cluster that meets the first condition; and
determining the dedicated host cluster that meets the first condition as the second dedicated host cluster.

In this possible implementation, a metric entered by the user is converted into the first condition, so that when the dedicated host is created, a dedicated host cluster that meets the user requirement can be obtained through filtering by using the first condition, to improve use experience of the user.

In a possible implementation of the first aspect, determining, from the first dedicated host cluster, the dedicated host cluster that meets the first condition includes:

for every two of the dedicated hosts in the first dedicated host cluster, if the first delay between the two dedicated hosts is greater than or equal to the second delay, determining the two dedicated hosts as the dedicated host cluster that meets the first condition.

In this possible implementation, each host whose communication delay is less than a communication delay entered by the user is selected from the first dedicated host cluster, so that communication performance of the created dedicated host meets a delay requirement of the user.

In a possible implementation of the first aspect, the first metric further includes a service availability probability of the first dedicated host cluster, and the method further includes:

obtaining a second probability, where the second probability includes a current actual service availability probability of the first dedicated host cluster;
generating the second condition based on a first probability and the second probability, where the second condition indicates a preset value relationship between the first probability and the second probability; and
creating a third dedicated host cluster based on the first condition and the second condition.

In this possible implementation, if the user specifies a probability that a dedicated host cluster can normally provide a service at any moment, a preset value relationship between the metric and a probability that a dedicated host can actually normally provide a service is converted into the second condition, and the third dedicated host cluster is created based on the first condition and the second condition, so that the created dedicated host can meet an availability requirement.

In a possible implementation of the first aspect, obtaining the second probability includes:

obtaining a third probability, where the third probability includes a probability that a dedicated host cluster in a single fault domain is faulty;
obtaining a fourth probability that a single host in the first dedicated host cluster is faulty; and

obtaining the second probability based on the third probability and the fourth probability.

In this possible implementation, an actual probability that the first dedicated host cluster cannot normally provide a service is calculated by collecting statistics on the probability that the dedicated host cluster in the single fault domain is faulty and the probability that the single host is faulty, to select, on this basis, a dedicated host cluster that meets the second condition.

In a possible implementation of the first aspect, creating the third dedicated host cluster based on the first condition and the second condition includes:

determining, from the first dedicated host cluster, a dedicated host cluster that meets both the first condition and the second condition; and
determining the dedicated host cluster that meets both the first condition and the second condition as the third dedicated host cluster.

In this possible implementation, the metric entered by the user is converted into the first condition and the second condition, and a dedicated host that meets the user requirement is selected based on the first condition and the second condition, so that delay and service availability related metrics entered by the user are converted into a constraint condition, to create the dedicated host cluster that meets the user requirement.

In a possible implementation of the first aspect, the first metric further includes a first deployment requirement of a plurality of dedicated hosts in the first dedicated host cluster, the first deployment requirement indicates affinity and/or anti-affinity between the plurality of dedicated hosts, and before obtaining the second delay, the method further includes: determining node positions of the plurality of dedicated hosts in the first dedicated host cluster based on the first deployment requirement.

In this possible implementation, if the user specifies an affinity requirement or an anti-affinity requirement of the dedicated host, a position of the dedicated host in a network structure is set based on the requirement, to create the dedicated host cluster that meets the user requirement. A part of dedicated hosts are deployed on a same node, so that running performance can be improved, a communication delay can be reduced, and running quality can be improved. A part of dedicated hosts are prohibited to be deployed on a same node, so that higher availability and a larger capacity are implemented. In addition, infrastructures in a cloud service are connected via a network topology including different network devices, some topology nodes are close to each other, and some topology nodes are far away from each other. In this method, the user is allowed to specify a network structure relationship between hosts when creating a dedicated host.

In a possible implementation of the first aspect, the first metric further includes a second deployment requirement of at least one fault domain to which the first dedicated host cluster belongs, the second deployment requirement indicates a quantity of and distribution in the at least one fault domain, and before obtaining the second delay, the method further includes: determining the quantity of the at least one fault domain and distribution of each dedicated host in the first dedicated host cluster in the at least one fault domain based on the second deployment requirement.

In this possible implementation, if the user specifies a quantity of and distribution in fault domains to which the dedicated host belongs, deployment is performed based on the requirement, to create the dedicated host cluster that meets the user requirement.

According to a second aspect, this application provides a dedicated host creation apparatus. For beneficial effects, refer to the descriptions of the first aspect. Details are not described herein again. The apparatus has a function of implementing behavior in the method example in the first aspect. The function may be implemented by hardware, or may be implemented by hardware executing corresponding software. The hardware or the software includes one or more modules corresponding to the function. In a possible design, the apparatus is used in a cloud management platform and includes:

a first delay obtaining module, configured to obtain a first metric, where the first metric includes a first delay between dedicated hosts in a first dedicated host cluster;
a second delay obtaining module, configured to obtain a second delay, where the second delay includes an actual delay between the dedicated hosts;
a first condition generation module, configured to generate a first condition based on the first delay and the second delay, where the first condition indicates a preset value relationship between the first delay and the second delay; and
a dedicated host creation module, configured to create a second dedicated host cluster based on the first condition.

In a possible implementation of the second aspect, the first delay includes a first average delay and a first maximum delay between the dedicated hosts, the second delay includes a second average delay and a second maximum delay between the dedicated hosts, and the first condition generation module is specifically configured to:

generate a second condition based on a preset value relationship between the first average delay and the second average delay;
generate a third condition based on a preset value relationship between the first maximum delay and the second maximum delay; and
combine the second condition and the third condition to generate the first condition.

In a possible implementation of the second aspect, the second delay obtaining module is specifically configured to:

obtain a total quantity of the dedicated hosts and a delay between every two of the dedicated hosts;
determine the second maximum delay based on the delay between every two of the dedicated hosts; and
determine the second average delay based on the total quantity of the dedicated hosts and the delay between every two of the dedicated hosts.

In a possible implementation of the second aspect, determining the second maximum delay based on the delay between every two of the dedicated hosts includes:
determining a maximum delay value from the delay between every two of the dedicated hosts, and determining the maximum delay value as the second maximum delay.

In a possible implementation of the second aspect, determining the second average delay based on the total quantity of the dedicated hosts and the delay between every two of the dedicated hosts includes:
determining a quotient of a sum of the delay between every two of the dedicated hosts and the total quantity of the dedicated hosts as the second average delay.

In a possible implementation of the second aspect, the dedicated host creation module is specifically configured to:

determine, from the first dedicated host cluster, a dedicated host cluster that meets the first condition; and
determine the dedicated host cluster that meets the first condition as the second dedicated host cluster.

In a possible implementation of the second aspect, determining, from the first dedicated host cluster, the dedicated host cluster that meets the first condition includes:
for every two of the dedicated hosts in the first dedicated host cluster, if the first delay between the two dedicated hosts is greater than or equal to the second delay, determining the two dedicated hosts as the dedicated host cluster that meets the first condition.

In a possible implementation of the second aspect, the first metric further includes a service availability probability of the first dedicated host cluster, and the dedicated host creation module is further configured to:

obtain a second probability, where the second probability includes a current actual service availability probability of the first dedicated host cluster;
generate the second condition based on a first probability and the second probability, where the second condition indicates a preset value relationship between the first probability and the second probability; and
create a third dedicated host cluster based on the first condition and the second condition.

In a possible implementation of the second aspect, obtaining the second probability includes:

obtaining a third probability, where the third probability includes a probability that a dedicated host cluster in a single fault domain is faulty;
obtaining a fourth probability that a single host in the first dedicated host cluster is faulty; and
obtaining the second probability based on the third probability and the fourth probability.

In a possible implementation of the second aspect, creating the third dedicated host cluster based on the first condition and the second condition includes:

determining, from the first dedicated host cluster, a dedicated host cluster that meets both the first condition and the second condition; and
determining the dedicated host cluster that meets both the first condition and the second condition as the third dedicated host cluster.

In a possible implementation of the second aspect, the first metric further includes a first deployment requirement of a plurality of dedicated hosts in the first dedicated host cluster, the first deployment requirement indicates affinity and/or anti-affinity between the plurality of dedicated hosts, and before obtaining the second delay, the second delay obtaining module is further configured to:

determine node positions of the plurality of dedicated hosts in the first dedicated host cluster based on the first deployment requirement.

In a possible implementation of the second aspect, the first metric further includes a second deployment requirement of at least one fault domain to which the first dedicated host cluster belongs, the second deployment requirement indicates a quantity of and distribution in the at least one fault domain, and before obtaining the second delay, the second delay obtaining module is further configured to:

determine the quantity of the at least one fault domain and distribution of each dedicated host in the first dedicated host cluster in the at least one fault domain based on the second deployment requirement.

In the second aspect of this application, the modules included in the dedicated host creation apparatus may be further configured to implement the steps in the possible implementations of the first aspect. For specific implementations of some steps in the second aspect and the possible implementations of the second aspect of embodiments of this application and beneficial effects brought by each possible implementation, refer to descriptions in the possible implementations of the first aspect. Details are not described herein again.

According to a third aspect, this application provides a dedicated host creation apparatus, including at least one memory and a processor. The memory stores code, and the processor is configured to execute the code, so that the dedicated host creation apparatus performs the method according to any one of the first aspect or the possible implementations of the first aspect.

According to a fourth aspect, this application provides a computing device cluster, including at least one computing device, where each computing device includes a processor and a memory; and

a processor of the at least one computing device is configured to execute instructions stored in a memory of the at least one computing device, to enable the computing device cluster to perform the method according to any one of the first aspect or the possible implementations of the first aspect.

According to a fifth aspect, this application provides a computer program product including instructions. When the instructions are run by a computing device cluster, the computing device cluster is enabled to perform the method according to any one of the first aspect or the possible implementations of the first aspect.

According to a sixth aspect, this application provides a computer-readable storage medium, including computer program instructions. When the computer program instructions are executed by a computing device cluster, the computing device cluster performs the method according to any one of the first aspect or the possible implementations of the first aspect.

According to a seventh aspect, this application provides a circuit system. The circuit system includes a processing circuit, and the processing circuit is configured to perform the method according to any one of the first aspect or the possible implementations of the first aspect.

According to an eighth aspect, this application provides a chip system, including a processor and a memory. The memory is configured to store a computer program, and the processor is configured to invoke and run the computer program stored in the memory, to perform the method according to any one of the first aspect or the possible implementations of the first aspect. The chip system may include a chip, or may include a chip and another discrete component.

The solutions according to the second aspect to the eighth aspect are used to implement or cooperate to implement the method according to any one of the first aspect or the possible implementations of the first aspect, and therefore can achieve same or corresponding beneficial effects as the first aspect. Details are not described herein again.

**BRIEF DESCRIPTION OF DRAWINGS**

FIG. 1a is a diagram of comparison between a dedicated host DEH and a common ECS host;
FIG. 1b is a diagram of a deployment position of a TOR switch;
FIG. 1c is a diagram of a connection between a TOR switch and an aggregation switch;
FIG. 2 is a diagram of an architecture of a conventional DCN according to an embodiment of this application;
FIG. 3 is a diagram of an architecture of a server according to an embodiment of this application;
FIG. 4 is a diagram of an application environment of a dedicated host creation method according to an embodiment of this application;
FIG. 5 is a flowchart of a dedicated host creation method according to an embodiment of this application;
FIG. 6 is another flowchart of a dedicated host creation method according to an embodiment of this application;
FIG. 7A and FIG. 7B are still another flowchart of a dedicated host creation method according to an embodiment of this application;
FIG. 8 is a diagram of a structure of a dedicated host creation apparatus according to an embodiment of this application;
FIG. 9 is a diagram of another structure of a dedicated host creation apparatus according to an embodiment of this application;
FIG. 10 is a diagram of a structure of a computing device according to an embodiment of this application;
FIG. 11 is a diagram of a structure of a computing device cluster according to an embodiment of this application;
FIG. 12 is a diagram of another structure of a computing device cluster according to an embodiment of this application; and
FIG. 13 is a diagram of still another structure of a computing device cluster according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application. A person skilled in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device.

The term "and/or" in this application describes only an association relationship between associated objects and represents that three relationships may exist. For example, A and/or B may represent the following three cases: Only A exists, both A and B exist, and only B exists. In addition, the character "/" in this application generally indicates an "or" relationship between the associated objects.

It should also be noted that in some alternative implementations, the marked functions/actions may not appear in orders of the accompanying drawings. For example, actually, two accompanying drawings shown in succession may essentially occur at the same time or may sometimes be performed in a reverse order, depending on the related functions/actions.

In embodiments of this application, unless otherwise specified, "at least one" means one or more, and "a plurality of" means two or more. It may be understood that, in this application, "when", "if", and "provided that" all mean that an apparatus performs corresponding processing in an objective situation, are not intended to limit time, do not mean that the apparatus is required to perform a determining action during implementation, and do not mean any other limitation. In addition, the specific term "example" means "used as an example, embodiment or illustration". Any embodiment described as an "example" is not necessarily explained as being superior or better than other embodiments.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

To better understand a dedicated host creation method provided in embodiments of this application, the following first describes some terms in embodiments of this application.

(1) Cloud management platform

A main function of the cloud management platform is to provide an access interface (for example, an interface or an application programming interface (application programming interface, API)). A tenant may operate a client to remotely access the access interface to register a cloud account and password on the cloud management platform and log in to the cloud management platform. After the cloud account and password are successfully authenticated by the cloud management platform, the tenant may further pay to select and purchase a virtual machine of a specific specification (a processor, a memory, and a disk) on the cloud management platform. After the purchasing with payment succeeds, the cloud management platform provides a remote login account and password of the purchased virtual machine. The client may be used to remotely log in to the virtual machine, to install and run an application of the tenant on the virtual machine.

Based on logical functions, the cloud management platform may be divided into a tenant console, a computing management service, a network management service, a storage management service, an authentication service, and an image management service. The tenant console provides an interface or an API for interacting with the tenant. The computing management service is used for managing a server and a bare metal server running a virtual machine and a container. The network management service is used for managing a network service (for example, a gateway and a firewall). The storage management service is used for managing a storage service (for example, a data bucket service). The authentication service is used for managing an account and password of a tenant. The image management service is used for managing a virtual machine image.

(2) Dedicated host

The dedicated host (Dedicated Host, DEH) is a dedicated physical host resource that can be exclusively used by a user. A computing host or physical host belongs to a tenant. Only the tenant of the dedicated host can provide an elastic compute service to the host, and other tenants cannot provide an elastic compute service to the dedicated host. The dedicated host is a service mode of cloud services. The user can directly purchase an entire host instead of a virtual machine. The dedicated host features exclusive use of physical resources, flexible deployment, and the like. There is no need to share a capacity with another user. In addition, a deployment manner of a virtual machine on the dedicated host can be controlled.

The dedicated host can provide more visibility, can control how an instance is placed on a physical server, and can ensure reliable use of a same physical server. Dedicated host resources can be used by only one tenant. In this way, the dedicated host resources can be isolated from physical resources of different tenants, to prevent resource contention or attacks between tenants. Dedicated hosts and public physical hosts are deployed together. Dedicated hosts of a same type of all tenants are deployed in a same host cluster or in a same public resource pool. Therefore, the dedicated hosts and the public physical hosts are logically isolated.

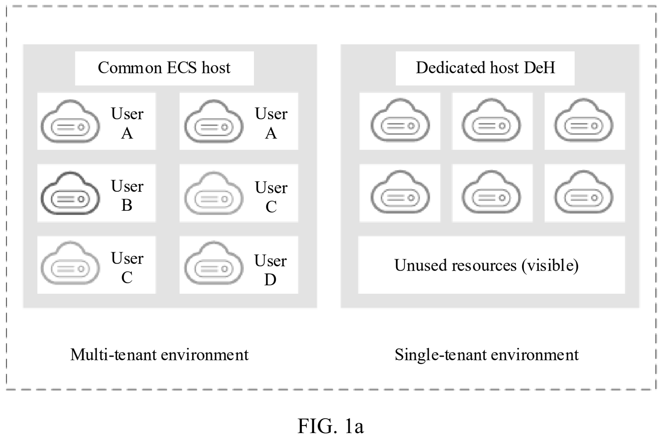

For example, FIG. 1a is a diagram of comparison between a dedicated host DEH and a common ECS (Elastic Compute Service, elastic compute service) host. As a unique tenant of the dedicated host, the tenant does not need to share physical resources of the host with another tenant, can obtain a physical attribute of the server, including a physical core, a CPU (Central Processing Unit, central processing unit) type, and a memory size, and creates an elastic compute service of a specified specification family based on a specification of the dedicated host. The tenant can specify a dedicated host to create an elastic compute service, or can create an elastic compute service on a specified dedicated host.

In embodiments of this application, it should be understood that the host may be understood as a physical server (Physical Machine, PM), and the server in embodiments of this application is obtained by creating or loading a cloud service on the host. In addition, a dedicated physical host resource that is exclusively used by a user is referred to as a dedicated host. After purchasing a dedicated host service from a cloud service provider, the user configures performance of a dedicated host cluster to create a dedicated host cluster that meets a user requirement.

(3) Region

The region (region) is a geographical concept, and usually refers to a geographical region where a data center is located. Regions can be divided based on a plurality of dimensions. For example, regions can be divided by region level, including south China, north China, and the like. Regions can alternatively be divided by province level, including Hubei, Hunan, and the like. Regions can alternatively be divided by city level, including Beijing, Shenzhen, and the like. Regions can alternatively be divided by county level. Division manners, a quantity, names, and the like of the regions are not specifically limited in this application. Regions are divided from dimensions of a geographical position and a network delay. A same resource pool is used in a same region (which may be understood as that public services such as elastic computing, block storage, object storage, a virtual private cloud (virtual private cloud, VPC) network, an elastic public network internet protocol (internet protocol, IP), and an image are shared).

(4) Availability zone

The availability zone (availability zone, AZ) is a zone of physical resources, and usually refers to a physical region where an equipment room or site is located. One AZ may represent a set of one or more data centers, and one AZ has independent water and electricity. A specific division manner of the AZ is not limited in this application. For example, equipment rooms with independent power supply and racks with independent power supply may be divided into AZs. AZs are independent of each other in terms of energy consumption and networks. Therefore, a fault in one availability zone does not affect another availability zone.

In an AZ, computing, network, and storage resources can be logically divided into a plurality of clusters. A plurality of AZs in a region may be interconnected via high-speed optical fibers, to meet a tenants' requirement for constructing a high availability system across AZs. The data center is based on a cloud computing architecture, and couples computing, storage, and network resources. A plurality of servers are disposed in a cloud data center, and computing, network, and storage resources are provided for different tenants in a manner of mutual isolation by using a virtualization technology and by using computing capabilities provided by the plurality of servers and network and storage resources.

(5) TOR

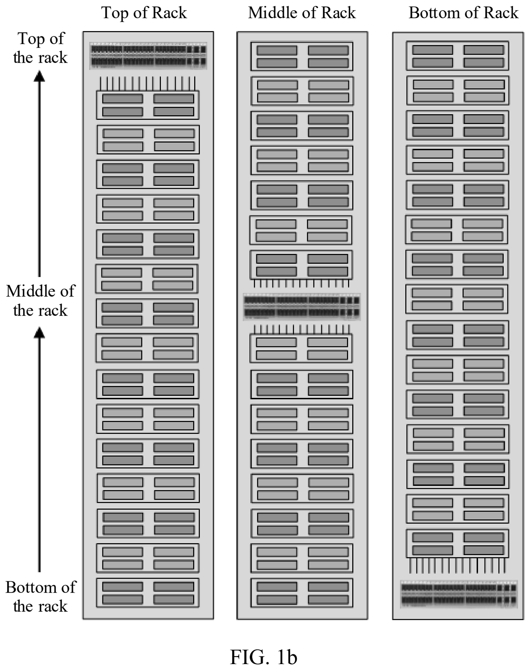

TOR (Top of Rack) means that one or two switches are deployed in each server rack, and a server is directly connected to a switch in the rack to implement interconnection between the server and the switch in the rack. Literally, Top of Rack refers to "the top of the rack". However, the core of TOR is to deploy switches in the server rack, where the switches can be deployed on the top of the rack, in the middle of the rack (Middle of Rack), or at the bottom of the rack (Bottom of Rack), as shown in FIG. 1b. FIG. 1b is a diagram of a deployment position of a TOR switch. Generally, deploying switches on the top of the rack facilitates cabling. Therefore, this architecture is most widely used.

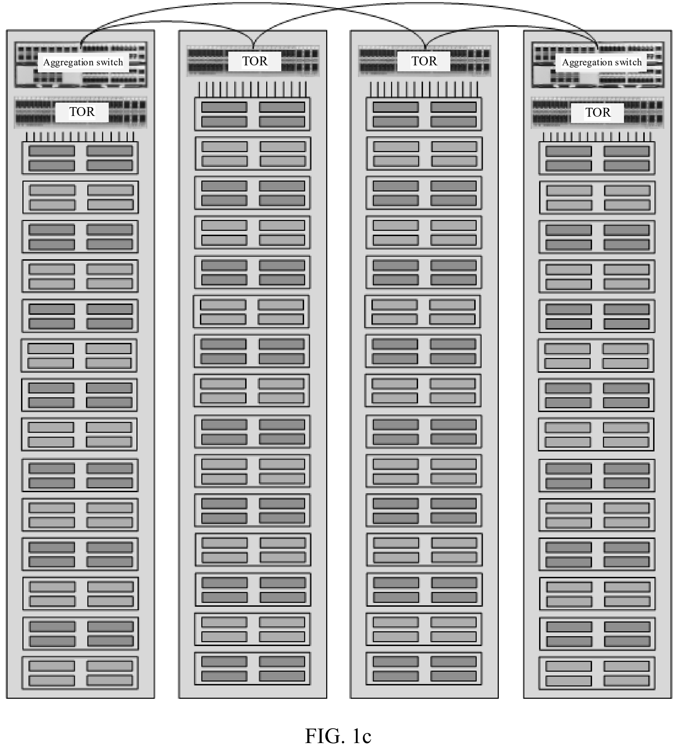

A switch deployed in a server rack in TOR mode is referred to as a TOR switch. A biggest advantage of the TOR architecture is that cables from a server to a switch are simplified. A port on a server in a rack may be directly connected to a TOR switch via a short jumper, and then connected to an aggregation switch via an optical fiber, as shown in FIG. 1c. FIG. 1c is a diagram of a connection between a TOR switch and an aggregation switch. This greatly shortens a cable usage distance, simplifies cable management, reduces complexity of a network structure, and meets a trend of a green and energy-saving data center. This also facilitates cable replacement during subsequent service expansion.

In the TOR architecture, each rack can be considered as an independent management entity. A server or switch can be gradually upgraded by rack. During the upgrade, traffic forwarding of another rack is not affected, and impact on services is minimized.

(6) Data center network

The data center network (Data Center Network, DCN) is a bridge connecting large-scale servers in a data center for distributed computing.

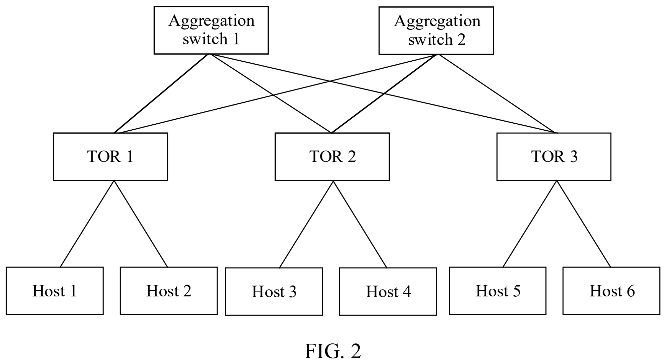

FIG. 2 is a diagram of an architecture of a conventional DCN according to an embodiment of this application. As shown in FIG. 2, a conventional data center network is mainly based on a host (server)-centric architecture. Servers in a same rack (rack) are not directly interconnected, but are interconnected via a corresponding TOR switch. A TOR switch (TOR for short) may also be referred to as an access switch or a leaf (leaf) switch. TORs communicate with each other via an aggregation switch. Therefore, in this architecture, servers in different racks may communicate with each other via a TOR and an aggregation switch. A rack unit (Rack Unit, or Rack for short) may accommodate a plurality of hosts. Each host can be configured to manage one or more VMs (virtual machines).

(7) Virtual machine

The virtual machine (Virtual Machine, VM) is also referred to as a virtual server, and is a complete computer system that is simulated by using software and that has a complete hardware system function and runs in a completely isolated environment. All tasks that can be completed on a server can be implemented on the virtual machine. When the virtual machine is created on the server, a part of a hard disk and a memory capacity of a physical machine need to be used as a hard disk and a memory capacity of the virtual machine. Each virtual machine has an independent hard disk and operating system. A user of the virtual machine can operate the virtual machine as the user uses the server. The virtual machine may also be referred to as an elastic compute service (Elastic Compute Service, ECS) or an elastic instance (different cloud service providers have different names).

To improve diversity, deployment flexibility, and risk resistance of cloud service types, a virtual machine is usually run on a physical dedicated host on a cloud, and a cloud service is deployed by using the virtual machine. When a plurality of services are run on the dedicated host on the cloud, each service is carried by a corresponding virtual machine. A plurality of physical hosts in a cloud resource pool form a host cluster. The physical host uses a virtualization technology to centrally schedule resources such as a CPU (Central Processing Unit, central processing unit) and a memory of the physical host, and establish a plurality of virtual machines. Each virtual machine independently runs an application, and occupies resources such as computing, IO (Input/Output, input/output), and network adapter broadband of the physical host.

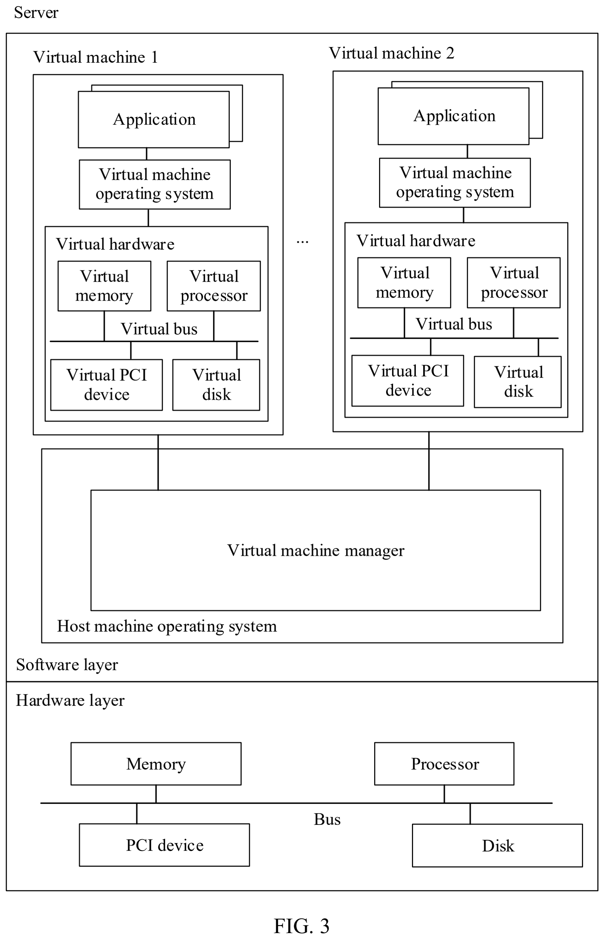

FIG. 3 is a diagram of an architecture of a server according to an embodiment of this application. A virtual machine runs on the server. As shown in FIG. 3, the server includes a hardware layer and a software layer. The hardware layer is a conventional configuration of the server. A PCI (Peripheral Component Interconnect, peripheral component interconnect) device may be, for example, a device that can be inserted into a PCI/PCIe slot of the server, like a network interface card, a GPU, or an offload card. The software layer includes an operating system installed and running on the server (an operating system relative to a virtual machine may be referred to as a host machine operating system). A virtual machine manager is disposed in the host machine operating system. A function of the virtual machine manager is to implement computing virtualization, network virtualization, and storage virtualization of the virtual machine, and manage the virtual machine.

Computing virtualization is to provide a part of a processor and memory of the server to the virtual machine. Network virtualization is to provide a part of functions (for example, bandwidth) of the network interface card to the virtual machine. Storage virtualization is to provide a part of disks to the virtual machine. The virtual machine manager may further implement logical isolation between different virtual machines, and manage the virtual machine, for example, create a virtual machine, simulate virtual hardware for the virtual machine based on the hardware layer (a hardware simulation function), delete a virtual machine, forward and/or process network packets between all virtual machines (for example, virtual machine 1 and virtual machine 2) running on the server or forward a network packet between the virtual machine on the server and an external network (a virtual switching function), process an I/O (Input/Output, input/output) generated by the virtual machine, and the like.

Running environments (for example, a virtual machine application, an operating system, and virtual hardware) in different virtual machines are completely isolated. If virtual machine 1 and virtual machine 2 need to communicate with each other, a network packet needs to be forwarded via a virtual machine manager.

A tenant may remotely log in to a virtual machine, and install, configure, and uninstall applications on the virtual machine in a virtual machine operating system environment.

(8) Resource pool

The resource pool is a set of hardware and software used in a cloud computing data center. Resource pools can be classified into computing resources, storage resources, and network resources.

A dedicated resource pool includes at least one physical host in a public resource pool. Dedicated mapping is performed on a dedicated physical host in the dedicated resource pool and a tenant, so that the entire resource pool is delivered to the mapped dedicated tenant for dedicated use within a specific period of time. The dedicated resource pool belongs to one tenant, and one tenant may have a plurality of dedicated resource pools. A physical host or a dedicated host in the dedicated resource pool may also be referred to as a dedicated physical host.

(9) Fault domain

The fault domain is a logical storage zone where a fault is isolated. Servers in a same rack or zone can be placed together for management, and data damage in this zone does not affect data in another zone. Faults of all hosts in a single fault domain are considered as a same fault.

In embodiments of this application, the fault domain is usually a physical fault domain, and a same infrastructure is set as a same fault domain. In addition, all hosts are theoretically divided into a same fault domain or different fault domains, and the fault domain includes all the hosts.

(10) Service-level agreement (SLA)

The service-level agreement (Service-Level Agreement, SLA) is a service commitment made by a system service provider to a customer. Four common SLA metrics are availability, accuracy, a system capacity, and a delay.

Availability refers to a percentage of time that system services can run properly. In embodiments of this application, a service availability probability actually represents availability of the SLA.

(11) Affinity/Anti-affinity

In embodiments of this application, affinity means that dedicated hosts are deployed on a same network node (for example, a same aggregation switch). A main function of affinity is to implement nearby deployment, enhance a network capability for nearby routing in communication, and reduce a network loss.

Anti-affinity means that dedicated hosts are deployed on different network nodes. Anti-affinity is mainly used to ensure high reliability. Instances are scattered as much as possible. When a node is faulty, only one instance in an application is affected.

The foregoing describes some terms in embodiments of this application. The following describes a dedicated host creation method provided in this application.

First, to better understand the solutions in embodiments of this application, the following describes an application environment of embodiments of this application.

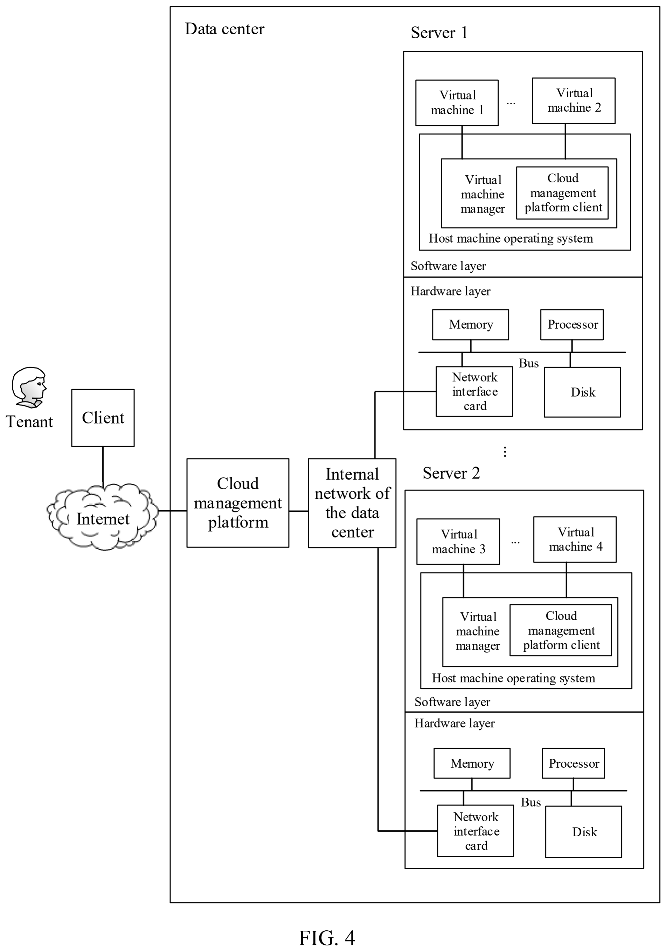

FIG. 4 is a diagram of an application environment of a dedicated host creation method according to an embodiment of this application. A client and a data center (Data Center, DC) are included. The DC mainly includes a cloud management platform, a data center network (DCN) shown in FIG. 2, and several servers shown in FIG. 3. The DC can accommodate a plurality of servers and communication devices. These devices are placed together because the devices have a same requirement on an environment and a same requirement on physical security, and it is convenient to maintain the devices when the devices are placed together. It should be understood that the server shown in FIG. 3 is a dedicated physical host on which a cloud service is deployed. In embodiments of this application, the server and the dedicated host in the data center and an internal network of the data center are considered to have a same meaning.

The dedicated host creation method provided in embodiments of this application may be applied to the cloud management platform in FIG. 4. A tenant may create, manage, log in to, and operate a virtual machine in a cloud data center via the cloud management platform.

The cloud management platform is mainly configured to provide an access interface (an interface or an API). The tenant may operate a client to remotely access the access interface to register a cloud account and password on the cloud management platform and log in to the cloud management platform. After the cloud account and password are successfully authenticated by the cloud management platform, the tenant may further pay to select and purchase a virtual machine of a specific specification (a processor, a memory, and a disk) on the cloud management platform. After the purchasing with payment succeeds, the cloud management platform provides a remote login account and password of the purchased virtual machine. The client may be used to remotely log in to the virtual machine, to install and run an application of the tenant on the virtual machine.

The client of the cloud management platform is mainly used to: receive a control-plane command sent by the cloud management platform, create the virtual machine on a server according to the control-plane control command, and perform full-service life-cycle management on the virtual machine.

In a specific application scenario, to improve use experience of a user, when selling a related service of a dedicated host (Dedicated Host, DEH), cloud service providers allow the user to specify a part of metrics when purchasing and creating the dedicated host. However, currently, when purchasing the dedicated host, the user is generally allowed to specify only basic parameters such as a type and quantity of dedicated hosts, and cannot specify higher-level parameters. In addition, infrastructures in a cloud service are connected via a network topology including different network devices, some topology nodes are close to each other, and some topology nodes are far away from each other. In addition, there is no solution in which the user is allowed to specify a network structure relationship between hosts when creating the dedicated host, and performance metrics required by the user cannot be converted into a method for creating the dedicated host.

To resolve a problem that the user cannot use a part of specified metrics on a dedicated host when purchasing the dedicated host, and consequently, the created dedicated host cannot meet a user requirement, embodiments of this application provide a dedicated host creation method, so that a part of metrics entered by the user can be converted into a condition that needs to be met when the dedicated host is created, to create the dedicated host that meets the user requirement, and ensure quality of service when the user uses a service of the dedicated host. In addition, to provide a higher degree of control over a dedicated host cluster for the user and help the user customize a to-be-purchased dedicated host in a more refined manner, a specific network topology of the dedicated host can also be specified by the user, to meet different customization requirements of the user for the dedicated host.

Specifically, when purchasing the dedicated host, the user enters a purchase page of the dedicated host via the access interface provided by the cloud management platform, and selects a basic configuration of the dedicated host. In this scenario, after the cloud management platform obtains a metric entered by the user, performance of the dedicated host specified by the user may be configured by using the method provided in this application, to create the dedicated host that meets the user requirement.

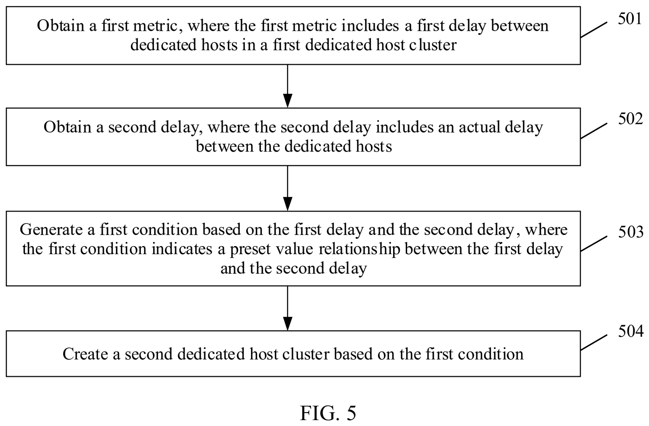

In a possible implementation, FIG. 5 is a flowchart of a dedicated host creation method according to an embodiment of this application. The method may be performed by a cloud management platform. The method specifically includes the following: 501: Obtain a first metric, where the first metric includes a first delay between dedicated hosts in a first dedicated host cluster. 502: Obtain a second delay, where the second delay includes an actual delay between the dedicated hosts. 503: Generate a first condition based on the first delay and the second delay, where the first condition indicates a preset value relationship between the first delay and the second delay. 504: Create a second dedicated host cluster based on the first condition.

It may be understood that, in an actual operation process, an access interface is remotely accessed via a client, and another interaction device like a display device may directly interact with a data center. In addition, a region (Region) and an availability zone (Availability Zone, AZ) are used to describe a position of the data center, and a tenant may create a cloud resource (including a virtual machine) in a specific region and availability zone. The region is a type of a physical region obtained through division based on a territory, for example, central China and east China. Usually, tenants of a virtual private cloud (Virtual Private Cloud, VPC) all choose to be in one region, and do not span regions. In another possible implementation, the DC and the region are physical regions divided from different dimensions, and the DC and the region may overlap. One DC may include a plurality of regions, and one region may span a plurality of DCs. The AZ is an independent and physically isolated availability zone. One region includes a plurality of AZs. When an AZ is faulty, another AZ is not affected. A server group includes a plurality of servers in an AZ. One AZ may include a plurality of server groups. One server group may include a plurality of servers.

It should be noted herein that the application environment shown in FIG. 4 is merely an example environment. The dedicated host creation method provided in embodiments of this application may be applied to but is not limited to the foregoing described scenario. This is not limited herein.

The foregoing describes the application environment provided in embodiments of this application. For ease of understanding, the following specifically describes, with reference to the accompanying drawings and application scenarios, a dedicated host creation method provided in embodiments of this application.

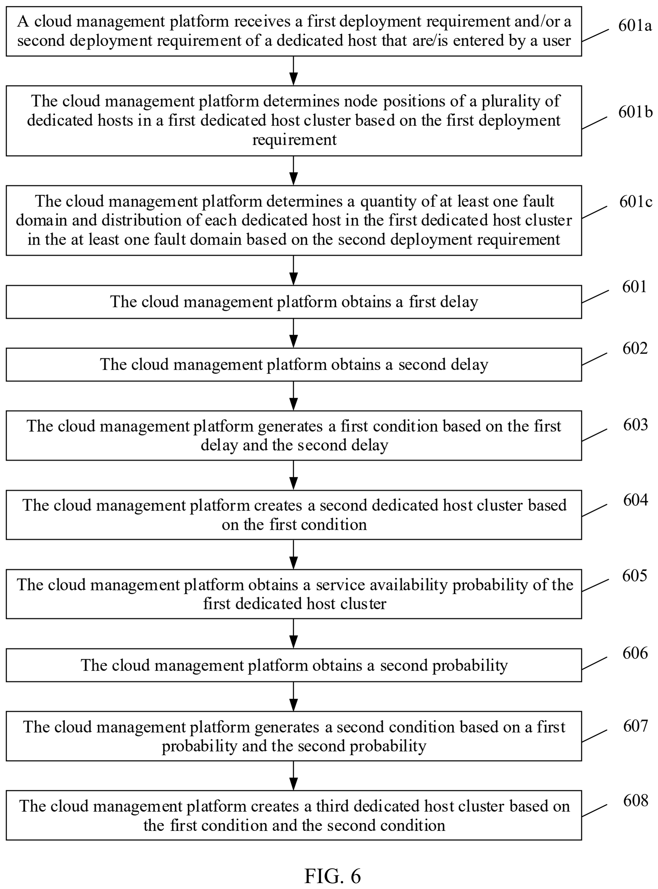

FIG. 6 is another flowchart of a dedicated host creation method according to an embodiment of this application. The dedicated host creation method may be performed by the cloud management platform shown in FIG. 4. As shown in FIG. 6, the cloud management platform may create a dedicated host by performing step 601 to step 610.

Before step 601, in a possible implementation, the method includes step 601a to step 601c.

601a: The cloud management platform receives a first deployment requirement and/or a second deployment requirement of a dedicated host that are/is entered by a user.

In this embodiment of this application, to provide a higher degree of control over a dedicated host cluster for the user, the user may specify the first deployment requirement and/or the second deployment requirement of a plurality of dedicated hosts in a first dedicated host cluster manually or in another manner like a device operation. The first deployment requirement indicates affinity and/or anti-affinity between the plurality of dedicated hosts, and the second deployment requirement indicates a quantity of and distribution in at least one fault domain.

Specifically, the first deployment requirement means that the user expects that a part of dedicated hosts in the dedicated host cluster need to be placed on a same network node (for example, on a same aggregation switch), and/or are prohibited to be placed on a same network node, to meet special requirements of a part of services. For example, refer to FIG. 2. Each node in FIG. 2 represents a network device in a current networking of a cloud service, and a deployment manner of a dedicated host may be publicly specified by the user for some nodes in a network, to meet a more detailed user requirement. In an actual operation, for example, the user may specify that host 1 and host 2 cannot be deployed on a same aggregation switch (anti-affinity), or host 1 and host 2 need to be deployed on a same aggregation switch (affinity).

Specifically, the second deployment requirement is a quantity of fault domains included in the dedicated host cluster and distribution of each host in each fault domain that the user expects. For example, refer to FIG. 2. Each node in FIG. 2 represents a network device in a current networking of a cloud service, and a deployment manner of a dedicated host may be publicly specified by the user for some nodes in a network, to meet a more detailed user requirement. In an actual operation, for example, the user may specify that host 1 and host 2 need to be placed in a same fault domain, and specify a quantity of hosts distributed in each fault domain.

It may be understood that, in the actual operation, the user may specify a requirement in a plurality of interactive input manners. This is not limited herein.

In a possible implementation, the cloud management platform performs validity check on the first deployment requirement and/or the second deployment requirement, and performs step 601b and/or step 601c only after the check succeeds.

In this implementation, the cloud management platform first performs validity check on a requirement entered by the user, to filter out an invalid input. The validity mainly emphasizes that a topology hierarchy relationship is disordered. Specifically, for example, the user cannot require anti-affinity of a dedicated host at a higher level (for example, a switch), but requires affinity at a lower level (for example, a rack). In an optional implementation, the validity may alternatively be associated with a delay between hosts and another factor. This may be specifically set based on an actual requirement, and is not limited herein.

601b: The cloud management platform determines node positions of the plurality of dedicated hosts in the first dedicated host cluster based on the first deployment requirement.

In this embodiment of this application, after receiving the first deployment requirement that is entered by the user and that the dedicated host cluster is expected to meet, the cloud management platform adjusts, based on the first deployment requirement, the node positions of the plurality of dedicated hosts in the first dedicated host cluster.

Specifically, for example, if the user specifies that host 1 and host 2 need to be deployed on a same aggregation switch, all aggregation switches are traversed to find an aggregation switch on which both hosts can be placed, and host 1 and host 2 are deployed on the aggregation switch. If the user specifies that host 1 and host 2 cannot be deployed on a same aggregation switch, host 1 may be first deployed on an aggregation switch, and host 2 may be deployed on another aggregation switch that meets a deployment requirement.

It should be understood that a specific method for deploying the node position of each dedicated host based on the affinity and/or the anti-affinity may be set based on an actual requirement or an experiment. This is not limited herein. In addition, in an actual operation process, specific deployment and physical positions of an internal network and a server of a data center generally do not change. A deployment requirement specified by the user may be implemented by using software logic, to create a dedicated host that meets a user requirement. To reduce scheduling difficulty, a quantity of dedicated hosts created based on this embodiment is usually strictly limited, and a specified network node or topology level cannot be excessively detailed.

601c: The cloud management platform determines the quantity of the at least one fault domain and distribution of each dedicated host in the first dedicated host cluster in the at least one fault domain based on the second deployment requirement.

In this embodiment of this application, after receiving the second deployment requirement that is entered by the user and that is of the at least one fault domain to which the first dedicated host cluster is expected to belong, the cloud management platform needs to determine distribution of dedicated hosts in different fault domains and a quantity of fault domains based on the second deployment requirement.

Specifically, for example, a TOR switch is a single fault domain. If the user specifies that three hosts are deployed on a TOR 1 switch and four hosts are deployed on a TOR 2 switch, distribution of dedicated hosts in the fault domain may be set based on the requirement.

It may be understood that a specific method for deploying the distribution in and the quantity of fault domains in the dedicated host cluster based on the second deployment requirement may be set based on an actual requirement or an experiment. This is not limited herein.

It should be understood that there is no strict limitation on a time sequence and an execution sequence between step 601b and step 601c. Specifically, step 601b and step 601c need to be performed based on a deployment requirement entered by the user and an input sequence. This is not limited in this application. In an actual operation process, the user may perform all or a part of the steps based on an actual requirement, or skip performing the foregoing steps when the user does not have a related requirement.

It should be noted that step 601a to step 601c are mainly used to help the user perform more refined customization on the dedicated host purchased by the user, including different levels of affinity, anti-affinity, or fault domain requirements, to meet different customization requirements of the user. In addition, validity check is performed on a requirement entered by the user, to avoid an improper input.

It should be understood that the method in step 601a to step 601c is merely an implementation of this embodiment of this application, and is a step performed only when the user has a related requirement on deployment of the dedicated host. In this embodiment of this application, if the user does not have a related deployment requirement, step 601 to step 605 may be directly performed. It should be understood that all other embodiments obtained by a person skilled in the art based on this embodiment without creative efforts shall fall within the protection scope of this application.

Further, on a basis of adjusting a position relationship between network nodes in a cloud computing resource pool, performance of the network nodes may be adjusted by performing step 601 to step 605. Step 601 to step 605 are specifically as follows:

601: The cloud management platform obtains a first delay.

In this embodiment of this application, the cloud management platform is responsible for receiving the first delay that is between the dedicated hosts in the first dedicated host cluster and that is entered by the user. After purchasing a related service of a dedicated host sold by a cloud service provider, the user may specify, when creating the dedicated host, a communication delay between virtual machines deployed on the dedicated host.

It should be noted that, because the communication delay is usually used for communication via an application running on each dedicated host, and is mainly used to obtain a transmission rate between hosts, the first delay between the dedicated hosts may indicate a communication delay between virtual machines deployed on the dedicated hosts. No additional description is provided herein. In addition, a manner in which the user specifies or enters a first metric may also be set based on an actual requirement. This is not limited herein.

In a possible implementation, the first delay includes a first average delay and a first maximum delay between the dedicated hosts.

In this possible implementation, the user specifies, by specifying an average communication delay and a maximum communication delay between the dedicated hosts in the first dedicated host cluster, delay performance that the dedicated host needs to meet.

It should be understood that, in an actual implementation and operation process, content of the first delay may be set based on a requirement or an experiment. This is not limited herein.

602: The cloud management platform obtains a second delay.

In this embodiment of this application, after obtaining the first metric specified by the user, the cloud management platform collects statistics on the second delay of the dedicated host, to create a constraint condition that meets a user requirement. Specifically, the second delay includes an actual delay between the dedicated hosts in the first dedicated host cluster.

It may be understood that a networking structure in which the first dedicated host cluster is located is preset, or may be a network structure that is reset after all or a part of steps in step 601a to step 601c are performed based on a preset networking structure and a deployment requirement specified by the user. On this basis, the actual delay between the dedicated hosts in the network structure is obtained.

In a possible implementation, the second delay includes a second average delay and a second maximum delay between the dedicated hosts.

In this possible implementation, an average communication delay and a maximum communication delay between dedicated hosts in a second dedicated host cluster in the current network structure are obtained, to obtain an actual communication delay between the dedicated hosts.

It should be understood that, in an actual implementation and operation process, content of the second delay may be set based on a requirement or an experiment. This is not limited herein.

In a possible implementation, the step in which the cloud management platform obtains the second delay in step 602 specifically includes the following:

The cloud management platform obtains a total quantity of the dedicated hosts and a delay between every two of the dedicated hosts.

The cloud management platform determines the second maximum delay based on the delay between every two of the dedicated hosts.

The cloud management platform determines the second average delay based on the total quantity of the dedicated hosts and the delay between every two of the dedicated hosts.

In this possible implementation, the second maximum delay is a maximum communication delay actually corresponding to the first dedicated host cluster in the current network structure, and the second average delay is an average communication delay actually corresponding to the first dedicated host cluster in the current network structure. The second maximum delay and the second average delay are calculated, to collect statistics on performance of a current actual communication delay of the dedicated host cluster.

It may be understood that, in an actual operation process, a quantity of dedicated hosts in the dedicated host cluster may be set based on an actual requirement. On a basis of meeting a basic quantity of two dedicated hosts, a plurality of dedicated hosts are disposed, and a delay between every two of the plurality of dedicated hosts is obtained. In this way, accuracy of a calculation result is improved, and redundancy backup can also be implemented.

In a possible implementation, determining the second maximum delay based on the delay between every two of the dedicated hosts specifically includes:

determining a maximum delay value from the delay between every two of the dedicated hosts, and determining the maximum delay value as the second maximum delay.

In this possible implementation, specifically, the delay between every two of the dedicated hosts in the current networking structure is traversed pairwise, and the maximum delay value is determined from the delay between every two of the dedicated hosts. The maximum value is the second maximum delay.

It may be understood that the actual communication delay between the dedicated hosts may be obtained through statistics collection after the dedicated hosts are deployed in respective physical positions, and may be directly obtained when the second maximum delay needs to be calculated.

For example, a calculation formula of the second maximum delay is specifically as follows:

$$\mathrm{MaxDelay} = \max\{s_{ij}\}, \forall i, j \quad (1)$$

Herein, MaxDelay represents the second maximum delay, and $s_{ij}$ represents a delay between host i and host j. $s_{ij}$ indicates that delay performance can be achieved when different topology layers shown in FIG. 2 are created for the dedicated hosts.

In addition, performance of the dedicated hosts may be classified in advance. After the user enters a delay metric, a corresponding classification area is found based on performance of the delay metric, to reduce search space and improve efficiency. For example, among 1000 hosts, 200 hosts have excellent performance. If the user has a high requirement on the delay, the user can directly select from the 200 hosts with excellent performance, to reduce search space. If a host with a high delay is preferentially provided for a user having a low requirement on the delay, scarce resources are wasted.

In a possible implementation, determining the second average delay based on the total quantity of the dedicated hosts and the delay between every two of the dedicated hosts includes:

determining a quotient of a sum of the delay between every two of the dedicated hosts and the total quantity of the dedicated hosts as the second average delay.

In this possible implementation, the second average delay is an actual average communication delay of the first dedicated host cluster in the current network structure. A specific calculation method is as follows: Statistics about a communication delay between the dedicated hosts and the total quantity of the dedicated hosts are collected in advance, and the quotient of the sum of the delay between every two of the dedicated hosts and the total quantity of the dedicated hosts is determined as the second average delay.

For example, a calculation formula of the second average delay is specifically as follows:

$$AvgDelay = \frac{\sum_{i=0}^{N-1} \sum_{j=i+1}^{N} s_{ij}}{N} \quad (2)$$

Herein, AvgDelay represents the second average delay, $s_{ij}$ represents a delay between host i and host j, and N represents the total quantity of the dedicated hosts.

603: The cloud management platform generates a first condition based on the first delay and the second delay.

In this embodiment of this application, after obtaining the first delay and the second delay, the cloud management platform converts a relationship between the first delay and the second delay into the first condition, to select a dedicated host cluster that meets a user requirement.

In a possible implementation, step 603 specifically includes the following:

The cloud management platform generates a second condition based on a preset value relationship between the first average delay and the second average delay.

The cloud management platform generates a third condition based on a preset value relationship between the first maximum delay and the second maximum delay.

The cloud management platform combines the second condition and the third condition to generate the first condition.

In this possible implementation, after obtaining the first delay entered by the user and the actual second delay between the dedicated hosts, the cloud management platform may generate the second condition based on the preset value relationship between the first average delay and the second average delay, generate the third condition based on the preset value relationship between the first maximum delay and the second maximum delay, and then establish a constraint condition by using an average delay and a maximum delay between the dedicated hosts as objects, to convert a metric entered by the user into a condition that needs to be met when the dedicated host is created, so as to create the dedicated host that meets the user requirement.

Specifically, if the user expects that the delay between the created dedicated hosts is not greater than the first average delay, the actual second average delay between the current dedicated hosts is calculated by using the formula (2), and all hosts in the first dedicated host cluster are traversed to find a dedicated host cluster that meets a condition. A calculation process of the first maximum delay is similar. A dedicated host cluster that meets a condition is selected, and the preceding two conditions are combined to finally select a dedicated host cluster that meets both conditions.

604: The cloud management platform creates the second dedicated host cluster based on the first condition.

In this embodiment of this application, after generating the first condition based on the first delay entered by the user and the second delay obtained through calculation, the cloud management platform selects, from the first dedicated host cluster, the second dedicated host cluster that meets the first condition, to obtain the dedicated host cluster that meets the user requirement.

In a possible implementation, step 604 specifically includes the following:

The cloud management platform determines, from the first dedicated host cluster, a dedicated host cluster that meets the first condition.

The cloud management platform determines the dedicated host cluster that meets the first condition as the second dedicated host cluster.

In this possible implementation, after determining, from the first dedicated host cluster, the dedicated host cluster that meets the first condition, the cloud management platform creates the dedicated host that meets the user requirement, to ensure quality of service, for example, a communication delay, when the user uses a dedicated host service.

In a possible implementation, in step 604, that the cloud management platform determines, from the first dedicated host cluster, the dedicated host cluster that meets the first condition includes the following:

For every two of the dedicated hosts in the first dedicated host cluster, if the first delay between the two dedicated hosts is greater than or equal to the second delay, the cloud management platform determines the two dedicated hosts as the dedicated host cluster that meets the first condition.

In this possible implementation, after the user enters the first delay that the dedicated host needs to meet, it is easy to understand that a lower delay indicates higher efficiency of communication between hosts. Therefore, a dedicated host cluster whose delay is less than or equal to the first delay is selected based on the collected second delay between the dedicated hosts, to create a dedicated host cluster that meets a delay performance requirement of the user.

It may be understood that, in this embodiment of this application, the first case is assumed. To be specific, it is assumed that the first delay is a maximum threshold specified by the user, and a metric less than the first delay is selected from the first dedicated host cluster, to select a dedicated host with better delay performance. However, in an actual operation, the second case may alternatively be used. It is assumed that the first delay is a minimum threshold specified by the user, and a metric greater than the first delay is selected from the first dedicated host cluster, to meet a special user requirement. It should be understood that, because the second case is rare, the first case is used for detailed description in this embodiment of this application, but this is not limited.

In some optional implementations, step 605 to step 608 are further included.

605: The cloud management platform obtains a service availability probability of the first dedicated host cluster.

In this embodiment of this application, if the first metric that is specified by the user and received by the cloud management platform further includes the service availability probability of the first dedicated host cluster, it indicates that the user specifies availability SLA that the dedicated host cluster needs to meet. It should be noted that the service availability probability is a probability of availability SLA, and may also be referred to as a probability of normally providing a service.

It may be understood that the user has absolute control over a dedicated resource pool, and can freely manage resource distribution in the dedicated host cluster, including specifying a specific host on which a virtual machine is deployed and specific parameters of each hard disk and network. In other words, in an actual operation, in addition to specifying performance metrics such as a delay and availability, the user may further specify specific performance parameters of the hard disk and the network, and the like. The metric entered by the user is not limited herein.

606: The cloud management platform obtains a second probability.

In this embodiment of this application, the second probability includes a current actual service availability probability of the first dedicated host cluster. If the user specifies a probability that the dedicated host in the first dedicated host cluster needs to normally provide a service, an actual service availability probability of the first dedicated host cluster in the current network is further calculated. It may be understood that the second probability is an actual probability of availability SLA of the dedicated host cluster in the current network, or is referred to as an actual service availability probability.

In a possible implementation, step 605 specifically includes the following:

The cloud management platform obtains a third probability, where the third probability includes a probability that a dedicated host cluster in a single fault domain is faulty.

The cloud management platform obtains a fourth probability that a single host in the first dedicated host cluster is faulty.

The cloud management platform obtains the second probability based on the third probability and the fourth probability.

In this possible implementation, the cloud management platform obtains the probability that the dedicated host cluster in the single fault domain is faulty and the fourth probability that the single host is faulty, to obtain the second probability through calculation. For example, a calculation formula of the second probability is as follows:

$$P = \sum_{i=9}^{10} C_{10}^i p^i (1-p)^{10-i} + \sum_{i=41}^{50} C_{50}^i q^i (1-q)^{50-i} \quad (3)$$

Herein, P represents a probability that a dedicated host in the first dedicated host cluster cannot normally provide a service, or may be understood as a probability that availability SLA is not met, p represents the probability that the dedicated host cluster in the single fault domain is faulty, q represents the fourth probability that the single host is faulty, and i is a positive integer.

It should be noted that an application scenario of the formula (3) may be as follows: It is assumed that 100 virtual machines are evenly deployed on a total of 50 hosts in 10 fault domains that use a TOR switch as a single fault domain, and it is assumed that an application is affected if an S-level fault occurs on more than one fifth of the hosts. In this case, P represents a probability that 10 hosts in the 50 hosts are faulty. Therefore, an availability probability in the dedicated host cluster that meets the user requirement needs to be less than or equal to P. In addition, in the formula 3, it is assumed that a single TOR switch is used as a physical region for current fault domain division. Therefore, p in a same physical fault domain is the same, and q in 50 hosts is also the same.

It may be understood that, if the user does not specify a related deployment requirement, and the cloud management platform does not implement content of step 601a to step 601c, the cloud management platform calculates the second probability based on the preset networking structure. If the user specifies related deployment of the fault domain in advance, the cloud management platform needs to recalculate the second probability in a deployed fault domain. In addition, this embodiment of this application is merely an optional implementation, and is merely an example for description. A specific calculation manner and content of the second probability may be set based on a specific requirement or a delay. This is not limited herein.

607: The cloud management platform generates a second condition based on a first probability and the second probability.

In this embodiment of this application, the second condition indicates a preset value relationship between the first probability and the second probability. After obtaining the first probability specified by the user and the actual second probability of the dedicated host cluster, the cloud management platform generates the second condition based on the relationship between the first probability and the second probability, to create the dedicated host cluster that meets the user requirement.

608: The cloud management platform creates a third dedicated host cluster based on the first condition and the second condition.

In this embodiment of this application, after generating the second condition based on the first probability entered by the user, the cloud management platform may create, based on the previously created first condition, the third dedicated host cluster that meets both the service availability probability of the user and the delay performance of the user.

In a possible implementation, step 608 specifically includes the following:

The cloud management platform determines, from the first dedicated host cluster, a dedicated host cluster that meets both the first condition and the second condition.

The cloud management platform determines the dedicated host cluster that meets both the first condition and the second condition as the third dedicated host cluster.

In this possible implementation, after determining, from the first dedicated host cluster, the dedicated host cluster that meets the first condition, the cloud management platform creates a dedicated host that meets a delay requirement specified by the user. On this basis, if the user has a requirement on availability of the dedicated host cluster, the second condition may continue to be generated based on the requirement, and the third dedicated host cluster that meets both the availability probability of the user and the delay performance of the user is further created based on the first condition and the second condition, so that the quality of service, for example, the communication delay and availability SLA, when the user uses the dedicated host service is ensured.

It may be understood that, in this embodiment of this application, availability specified by the user is limited to be performed only when the delay requirement is met. However, in an actual operation, the user may alternatively limit only availability SLA of the dedicated host cluster. This is merely an optional implementation, and is not limited.

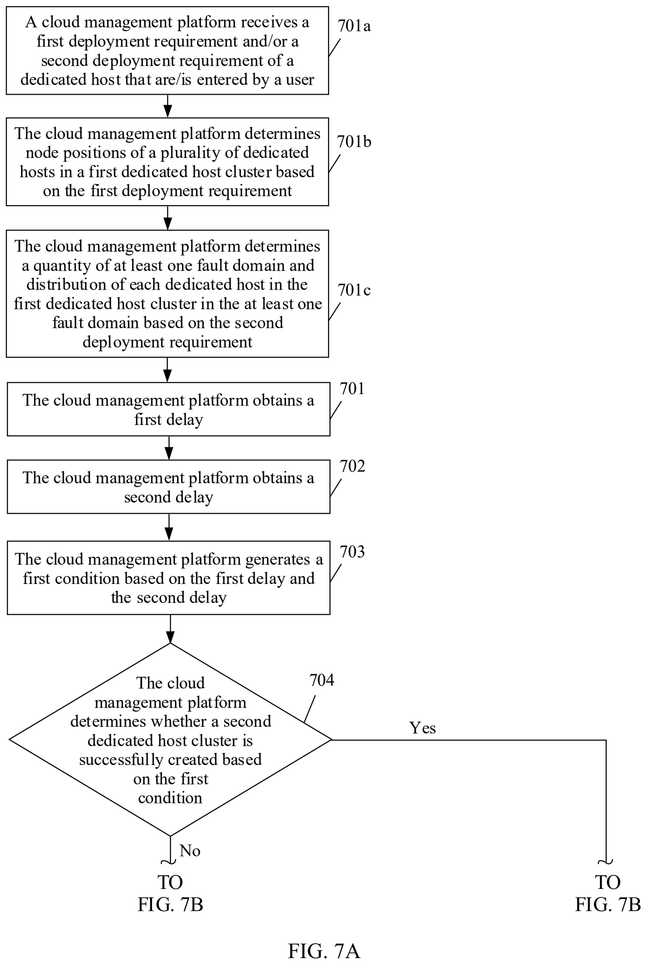

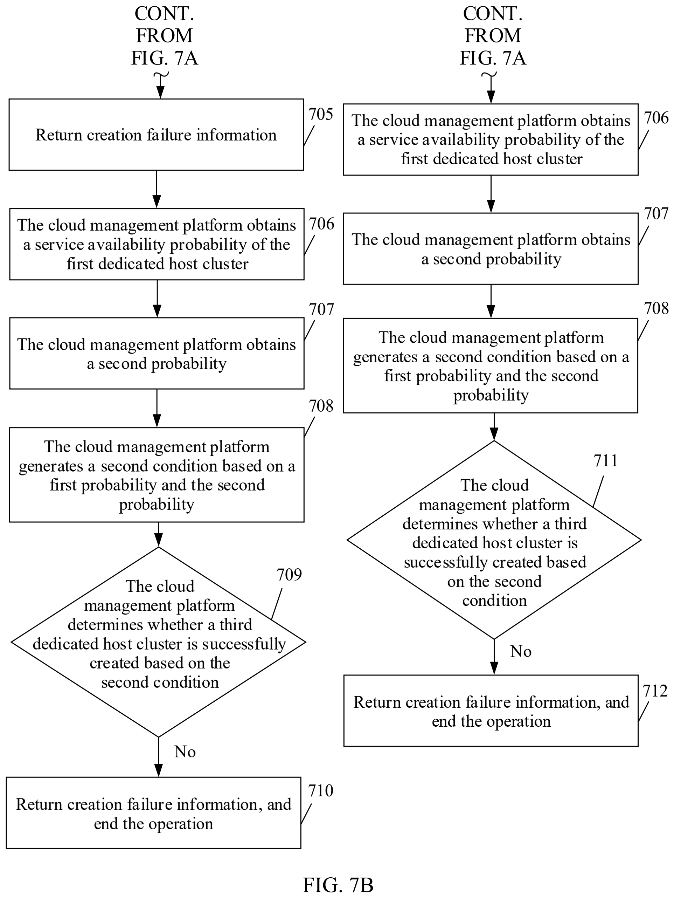

FIG. 7A and FIG. 7B are still another flowchart of a dedicated host creation method according to an embodiment of this application. The dedicated host creation method shown in FIG. 7A and FIG. 7B may be applied to the cloud management platform shown in FIG. 4. As shown in FIG. 7A and FIG. 7B, the dedicated host creation method includes step 701 to step 703.

Before step 701, optionally, in a possible implementation, the method further includes step 701a to step 701c.

It should be noted that step 701a to step 701c are similar to step 601a to step 601c. For a specific implementation and technical details, refer to step 601a to step 601c. Details are not described herein again.

Further, step 701 to step 703 are specifically as follows:

701: The cloud management platform obtains a first delay.

It should be noted that step 701 is similar to step 601. For a specific implementation and technical details, refer to step 601. Details are not described herein again.

702: The cloud management platform obtains a second delay.

It should be noted that step 702 is similar to step 602. For a specific implementation and technical details, refer to step 602. Details are not described herein again.

703: The cloud management platform generates a first condition based on the first delay and the second delay.

It should be noted that step 703 is similar to step 603. For a specific implementation and technical details, refer to step 603. Details are not described herein again.

704: The cloud management platform determines whether a second dedicated host cluster is successfully created based on the first condition. If no, the creation fails, and step 705 to step 709 are performed. If yes, the creation succeeds, and step 706 to step 708 and step 711 are performed.

In this embodiment of this application, when the cloud management platform selects, from a first dedicated host cluster based on the first condition, a dedicated host that meets a condition, a selection failure may occur, that is, performance of dedicated hosts in a current network cannot meet a requirement specified by a user.

705: Return creation failure information.

In this embodiment of this application, after generating the first condition based on the requirement specified by the user, if the cloud management platform cannot find, from the dedicated hosts in the current network, a dedicated host that meets the first condition, the cloud management platform directly returns the creation failure information.

In a possible implementation, after returning the creation failure information, the cloud management platform outputs a creation failure cause of a user.

In this possible implementation, when the cloud management platform cannot select, from the first dedicated host cluster based on the first condition, the dedicated host that meets the condition, the cloud management platform directly returns the creation failure information, and adds the creation failure cause, to prompt the user of the creation failure cause. In this way, use experience of the user is improved.

706: The cloud management platform obtains a service availability probability of the first dedicated host cluster.

707: The cloud management platform obtains a second probability.

708: The cloud management platform generates a second condition based on a first probability and the second probability.

It should be noted that step 706 to step 708 are similar to step 605 to step 607. For a specific implementation and technical details, refer to step 605 to step 607. Details are not described herein again.

709: The cloud management platform determines whether a third dedicated host cluster is successfully created based on the second condition. If no, the creation fails, and step 710 is performed. If yes, the creation succeeds.

In this embodiment of this application, after the cloud management platform fails to create a dedicated host based on the first condition, the cloud management platform further selects, based on the second condition, the third dedicated host cluster that meets a service availability probability requirement of the user.

710: Return creation failure information, and end the operation.

In this embodiment of this application, after generating the second condition based on the requirement specified by the user, if the cloud management platform cannot find, from the dedicated hosts in the current network, a dedicated host that meets the second condition, the cloud management platform directly returns the creation failure information.

In a possible implementation, after returning the creation failure information, the cloud management platform outputs a creation failure cause of the user.

In this possible implementation, when the cloud management platform cannot select, from the first dedicated host cluster based on the second condition, the dedicated host that meets the condition, the cloud management platform directly returns the creation failure information, and adds the creation failure cause, to prompt the user of the creation failure cause. In this way, use experience of the user is improved.

711: The cloud management platform determines whether a fourth dedicated host cluster is successfully created based on the first condition and the second condition. If no, the creation fails, and step 712 is performed. If yes, the creation succeeds.

In this embodiment of this application, if the cloud management platform successfully creates the dedicated host based on the first condition, and on this basis, the user has a requirement on a service availability probability that the dedicated host cluster meets, the second condition is generated based on the requirement, and the fourth dedicated host cluster that meets the service availability probability requirement of the user is further selected based on the first condition and the second condition.

It should be noted that, in an actual operation process, on a basis that a dedicated host cluster that meets a requirement is successfully created based on both the first condition and the second condition, there is no specific requirement on a generation sequence of the first condition and the second condition. This embodiment of this application is merely an implementation, and is not limited herein.

712: Return creation failure information, and end the operation.

It should be noted that step 712 is similar to step 710 and step 705. For a specific implementation and technical details, refer to step 710 and step 705. Details are not described herein again.

It may be understood that, in this embodiment of this application, availability specified by the user is limited to be performed only when a delay requirement is met. However, in an actual operation, the user may alternatively limit only availability SLA of the dedicated host cluster. This is merely an optional implementation, and is not limited.

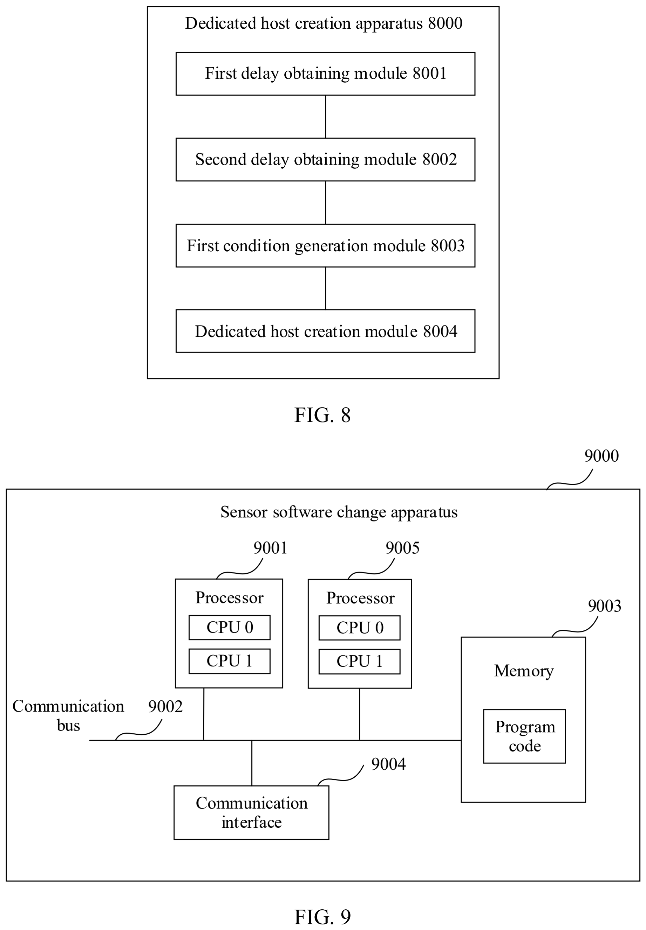

FIG. 8 is a diagram of a structure of a dedicated host creation apparatus according to an embodiment of this application. The dedicated host creation apparatus is used on the cloud management platform shown in FIG. 4. The dedicated host creation apparatus 8000 includes:

a first delay obtaining module 8001, configured to obtain a first metric, where the first metric includes a first delay between dedicated hosts in a first dedicated host cluster;
a second delay obtaining module 8002, configured to obtain a second delay, where the second delay includes an actual delay between the dedicated hosts;
a first condition generation module 8003, configured to generate a first condition based on the first delay and the second delay, where the first condition indicates a preset value relationship between the first delay and the second delay; and
a dedicated host creation module 8004, configured to create a second dedicated host cluster based on the first condition.

The first delay obtaining module 8001, the second delay obtaining module 8002, the first condition generation module 8003, and the dedicated host creation module 8004 may all be implemented by software, or may be implemented by hardware. For example, the following uses the first delay obtaining module 8001 as an example to describe an implementation of the first delay obtaining module 8001. Similarly, for implementations of the second delay obtaining module 8002, the first condition generation module 8003, and the dedicated host creation module 8004, refer to the implementation of the first delay obtaining module 8001.

When a module is used as an example of a software functional unit, the first delay obtaining module 8001 may include code that runs on a compute instance. The compute instance may include at least one of a physical host (a computing device), a virtual machine, and a container. Further, there may be one or more compute instances. For example, the first delay obtaining module 8001 may include code that runs on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented via the communication gateway.

When a module is used as an example of a hardware functional unit, the first delay obtaining module 8001 may include at least one computing device, for example, a server. Alternatively, the first delay obtaining module 8001 may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

A plurality of computing devices included in the first delay obtaining module 8001 may be distributed in a same region, or may be distributed in different regions. The plurality of computing devices included in the first delay obtaining module 8001 may be distributed in a same AZ, or may be distributed in different AZs. Similarly, the plurality of computing devices included in the first delay obtaining module 8001 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the first delay obtaining module 8001 may be configured to perform any step in the dedicated host creation method, the second delay obtaining module 8002, the first condition generation module 8003, and the dedicated host creation module 8004 may all be configured to perform any step in the dedicated host creation method, steps implemented by the first delay obtaining module 8001, the second delay obtaining module 8002, the first condition generation module 8003, and the dedicated host creation module 8004 may be specified based on a requirement, and the first delay obtaining module 8001, the second delay obtaining module 8002, the first condition generation module 8003, and the dedicated host creation module 8004 separately implement different steps in the dedicated host creation method, to implement all functions of the dedicated host creation apparatus.

In a possible implementation, the first delay includes a first average delay and a first maximum delay between the dedicated hosts, the second delay includes a second average delay and a second maximum delay between the dedicated hosts, and the first condition generation module 8003 is specifically configured to:

generate a second condition based on a preset value relationship between the first average delay and the second average delay;
generate a third condition based on a preset value relationship between the first maximum delay and the second maximum delay; and
combine the second condition and the third condition to generate the first condition.

In a possible implementation, the second delay obtaining module 8002 is specifically configured to:

obtain a total quantity of the dedicated hosts and a delay between every two of the dedicated hosts;
determine the second maximum delay based on the delay between every two of the dedicated hosts; and
determine the second average delay based on the total quantity of the dedicated hosts and the delay between every two of the dedicated hosts.

In a possible implementation of the second aspect, determining the second maximum delay based on the delay between every two of the dedicated hosts includes:
determining a maximum delay value from the delay between every two of the dedicated hosts, and determining the maximum delay value as the second maximum delay.

In a possible implementation, determining the second average delay based on the total quantity of the dedicated hosts and the delay between every two of the dedicated hosts includes:
determining a quotient of a sum of the delay between every two of the dedicated hosts and the total quantity of the dedicated hosts as the second average delay.

In a possible implementation, the dedicated host creation module 8004 is specifically configured to:

determine, from the first dedicated host cluster, a dedicated host cluster that meets the first condition; and

determine the dedicated host cluster that meets the first condition as the second dedicated host cluster.

In a possible implementation, determining, from the first dedicated host cluster, the dedicated host cluster that meets the first condition includes:

for every two of the dedicated hosts in the first dedicated host cluster, if the first delay between the two dedicated hosts is greater than or equal to the second delay, determining the two dedicated hosts as the dedicated host cluster that meets the first condition.

In a possible implementation, the first metric further includes a service availability probability of the first dedicated host cluster, and the dedicated host creation module 8004 is further configured to:

obtain a second probability, where the second probability includes a current actual service availability probability of the first dedicated host cluster;

generate the second condition based on a first probability and the second probability, where the second condition indicates a preset value relationship between the first probability and the second probability; and

create a third dedicated host cluster based on the first condition and the second condition.

In a possible implementation, obtaining the second probability includes:

obtaining a third probability, where the third probability includes a probability that a dedicated host cluster in a single fault domain is faulty;

obtaining a fourth probability that a single host in the first dedicated host cluster is faulty; and

obtaining the second probability based on the third probability and the fourth probability.

In a possible implementation, creating the third dedicated host cluster based on the first condition and the second condition includes:

determining, from the first dedicated host cluster, a dedicated host cluster that meets both the first condition and the second condition; and

determining the dedicated host cluster that meets both the first condition and the second condition as the third dedicated host cluster.

In a possible implementation, the first metric further includes a first deployment requirement of a plurality of dedicated hosts in the first dedicated host cluster, the first deployment requirement indicates affinity and/or anti-affinity between the plurality of dedicated hosts, and before obtaining the second delay, the second delay obtaining module 8002 is further configured to:

determine node positions of the plurality of dedicated hosts in the first dedicated host cluster based on the first deployment requirement.

In a possible implementation, the first metric further includes a second deployment requirement of at least one fault domain to which the first dedicated host cluster belongs, the second deployment requirement indicates a quantity of and distribution in the at least one fault domain, and before obtaining the second delay, the second delay obtaining module 8002 is further configured to:

determine the quantity of the at least one fault domain and distribution of each dedicated host in the first dedicated host cluster in the at least one fault domain based on the second deployment requirement.

In this embodiment, operations performed by the units in the dedicated host creation apparatus 8000 are similar to those described in the method embodiment shown in FIG. 6, may be used to implement functions of the cloud management platform in the foregoing method embodiment, and can also implement beneficial effects of the foregoing method embodiment. Details are not described herein again.

FIG. 9 is a diagram of another structure of a dedicated host creation apparatus according to an embodiment of this application. As shown in FIG. 9, the dedicated host creation apparatus 9000 is implemented by using a general bus architecture.

The dedicated host creation apparatus 9000 includes at least one processor 9001, a communication bus 9002, a memory 9003, and at least one communication interface 9004.

The processor 9001, the memory 9003, and the communication interface 9004 communicate with each other via the communication bus 9002, or may implement communication via wireless transmission and the like. The memory 9003 is configured to store instructions, and the processor 9001 is configured to execute the instructions stored in the memory 9003. The memory 9003 stores program code, and the processor 9001 may invoke the program code stored in the memory 9003 to perform step 601 to step 604 in the embodiment shown in FIG. 6. For a specific implementation, refer to the specific descriptions of step 601 to step 604 in the embodiment shown in FIG. 6. Details are not described herein again.

Optionally, the processor 9001 is a general-purpose central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device (programmable logic device, PLD), a transistor logic device, a hardware component, or any combination thereof. The PLD is a complex programmable logic device (complex programmable logic device, CPLD), a field-programmable logic gate array (field-programmable gate array, FPGA), generic array logic (generic array logic, GAL), or any combination thereof.

The communication bus 9002 is configured to transmit information between the processor 9001, the memory 9003, and the communication interface 9004. The communication bus 9002 is classified into an address bus, a data bus, a control bus, and the like. For ease of representation, only one thick line is used to represent the bus in the figure, but this does not mean that there is only one bus or only one type of bus.

Optionally, the memory 9003 is a read-only memory (read-only memory, ROM) or another type of static storage device that can store static information and instructions. Alternatively, the memory 9003 is a random access memory (random access memory, RAM) or another type of dynamic storage device that can store information and instructions. Alternatively, the memory 9003 is an electrically erasable programmable read-only memory (electrically erasable programmable read-only Memory, EEPROM), a compact disc read-only memory (compact disc read-only memory, CD-ROM) or another optical disc storage, an optical disc storage (including a compact optical disc, a laser disc, an optical disc, a digital versatile disc, a blue-ray optical disc, or the like), a magnetic disk storage medium or another magnetic storage device, or any other computer-accessible medium that can be configured to carry or store expected program code in a form of instruction or data structure, but is not limited thereto. Optionally, the memory 9003 exists independently, and is connected to the processor 9001 via the communication bus 9002. Optionally, the memory 9003 is integrated with the processor 9001.

The communication interface 9004 uses any apparatus like a transceiver, and is configured to communicate with another device or a communication network. The communication interface 9004 includes a wired communication interface. Optionally, the communication interface 9004 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in an embodiment, the processor 9001 includes one or more CPUs, for example, CPU 0 and CPU 1 shown in FIG. 9.

During specific implementation, in an embodiment, the dedicated host creation apparatus 9000 includes a plurality of processors, for example, the processor 9001 and a processor 9005 shown in FIG. 9. Each of the processors is a single-core processor (single-CPU) or a multicore processor (multi-CPU). The processor herein is one or more devices, circuits, and/or processing cores configured to process data (for example, computer program instructions).

In some embodiments, the memory 9003 is configured to store program code for executing the solutions of this application, and the processor 9001 executes the program code stored in the memory 9003. In other words, the dedicated host creation apparatus 9000 implements the foregoing embodiment of the dedicated host creation method by using the processor 9001 and the program code in the memory 9003.

It may be understood that the method steps in embodiments of this application may be implemented in hardware, or may be implemented in software instructions that may be executed by the processor 9001. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. In addition, a scope of the apparatus described in this application is not limited thereto, and a structure of the apparatus may not be limited to that in FIG. 9. The apparatus may be an independent device, or may be a part of a large device. For example, the apparatus may be:

(1) an independent integrated circuit IC, a chip, or a chip system or subsystem;
(2) a set including one or more ICs, where optionally, the IC set may further include a storage component configured to store data and/or instructions;
(3) a module that can be embedded in another device;
(4) a receiver, a terminal, an intelligent terminal, a wireless device, a handheld device, a mobile unit, a vehicle-mounted device, an artificial intelligence device, a machine device, a home device, a medical device, an industrial device, and the like;
(5) others, or the like.

It may be clearly understood by a person skilled in the art that, for the purpose of convenient and brief description, for a detailed working process of the foregoing apparatus, refer to a corresponding process in the foregoing method embodiments, and details are not described herein again.

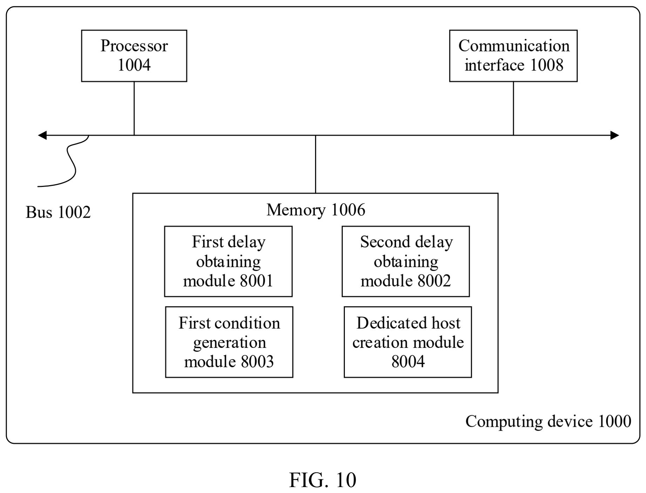

This application further provides a computing device 1000. FIG. 10 is a diagram of a structure of a computing device according to an embodiment of this application. The computing device 1000 includes a bus 1002, a processor 1004, a memory 1006, and a communication interface 1008. The processor 1004, the memory 1006, and the communication interface 1008 communicate with each other via the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 10, but this does not mean that there is only one bus or only one type of bus. The bus 1004 may include a path for transmitting information between components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a nonvolatile memory (nonvolatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the first delay obtaining module 8001, the second delay obtaining module 8002, the first condition generation module 8003, and the dedicated host creation module 8004, so as to implement the dedicated host creation method. In other words, the memory 1006 stores instructions for performing the dedicated host creation method.

The communication interface 1003 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

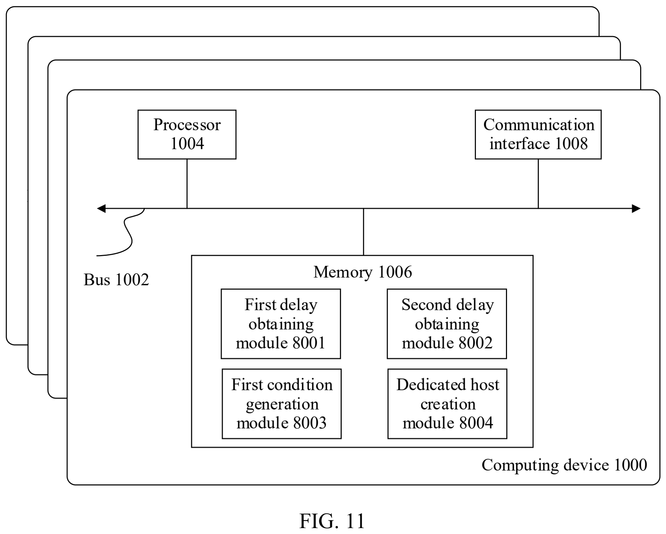

FIG. 11 is a diagram of a structure of a computing device cluster according to an embodiment of this application. The computing device cluster includes at least one computing device 1000. The memory 1006 in one or more computing devices 1000 in the computing device cluster may store a same instruction for performing the dedicated host creation method.

In some possible implementations, the memory 1006 in the one or more computing devices 1000 in the computing device cluster may alternatively separately store some instructions for performing the dedicated host creation method. In other words, a combination of one or more computing devices 1000 may jointly execute the instructions for performing the dedicated host creation method.

It should be noted that memories 1006 in different computing devices 1000 in the computing device cluster may store different instructions for separately executing some functions of the dedicated host creation apparatus. In other words, instructions stored in the memories 1006 in different computing devices 1000 may implement functions of one or more of the first delay obtaining module 8001, the second delay obtaining module 8002, the first condition generation module 8003, and the dedicated host creation module 8004.

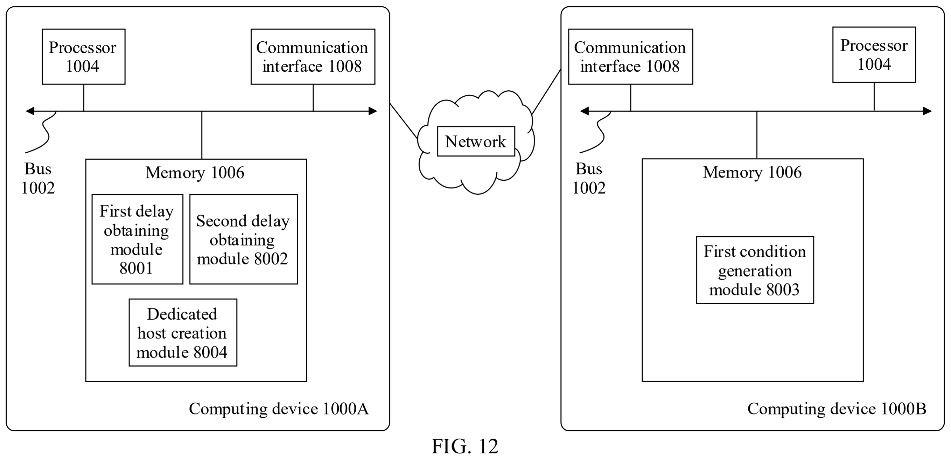

In some possible implementations, the one or more computing devices in the computing device cluster may be connected via a network. The network may be a wide area network, a local area network, or the like. FIG. 12 shows a possible implementation. FIG. 12 is a diagram of another structure of a computing device cluster according to an embodiment of this application. As shown in FIG. 12, two computing devices 1000A and 1000B are connected via a network. Specifically, each computing device is connected to the network via a communication interface of the computing device. In this possible implementation, a memory 1006 in the computing device 1000A stores instructions for executing functions of the first delay obtaining module 8001, the second delay obtaining module 8002, and the dedicated host creation module 8004. In addition, a memory 1006 in the computing device 1000B stores instructions for executing a function of the first condition generation module 8003.

A manner of connection between computing device clusters shown in FIG. 12 may be a manner in which it is considered that a large quantity of calculations are required to generate a first condition in the dedicated host creation method provided in this application. Therefore, it is considered that a function of the first condition generation module 8003 is executed by the computing device 1000B.

It should be understood that a function of the computing device 1000A shown in FIG. 12 may alternatively be completed by a plurality of computing devices 1000. Similarly, a function of the computing device 1000B may also be completed by the plurality of computing devices 1000.

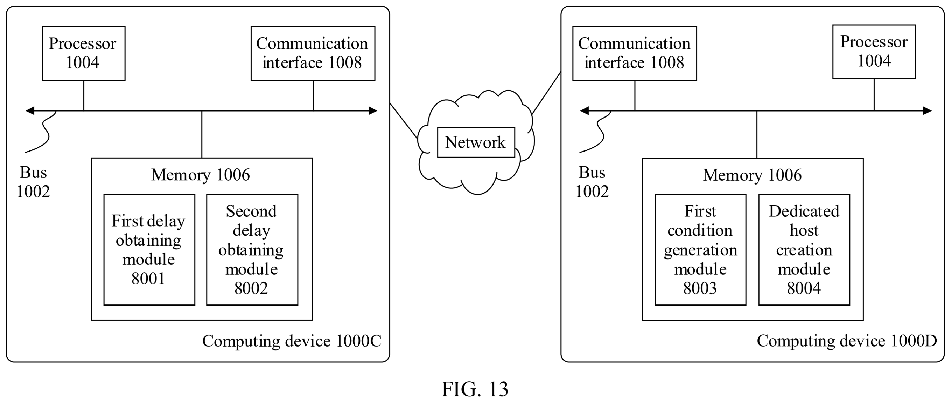

In some possible implementations, the one or more computing devices in the computing device cluster may be connected via a network. The network may be a wide area network, a local area network, or the like. FIG. 13 shows a possible implementation. FIG. 13 is a diagram of still another structure of a computing device cluster according to an embodiment of this application. As shown in FIG. 13, two computing devices 1000C and 1000D are connected via a network. Specifically, each computing device is connected to the network via a communication interface of the computing device. In this possible implementation, a memory 1006 in the computing device 1000C stores instructions for executing functions of the first delay obtaining module 8001 and the second delay obtaining module 8002. In addition, a memory 1006 in the computing device 1000D stores instructions for executing functions of the first condition generation module 8003 and the dedicated host creation module 8004.

A manner of connection between computing device clusters shown in FIG. 13 may be a manner in which it is considered that in the dedicated host creation method provided in this application, a large quantity of calculations are required to generate a first condition, and a second dedicated host cluster that meets a user requirement is quickly created. Therefore, it is considered that functions of the first condition generation module 8003 and the dedicated host creation module 8004 are executed by the computing device 1000D.

It should be understood that a function of the computing device 1000C shown in FIG. 13 may alternatively be completed by a plurality of computing devices 1000. Similarly, a function of the computing device 1000D may also be completed by the plurality of computing devices 1000.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the dedicated host creation method.

An embodiment of this application further provides a computer-readable storage medium. The computer-readable storage medium may be any usable medium accessible by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the dedicated host creation method.

The dedicated host creation apparatus provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the dedicated host creation method described in the foregoing embodiment. Optionally, the storage unit is a storage unit in the chip, and is, for example, a register or a buffer. Alternatively, the storage unit may be a storage unit in a wireless access device but outside the chip, and is, for example, a read-only memory (read-only memory, ROM), another type of static storage device that can store static information and instructions, or a random access memory (random access memory, RAM).

It may be understood that the apparatus and method described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

Embodiments in this specification are described in a progressive manner. For same or similar parts in the embodiments, refer to each other. Each embodiment focuses on a difference from other embodiments.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division, and there may be another division manner during implementation in actual application. For example, a plurality of units may be combined or integrated into another system, or some features may be ignored or not performed. In addition, the displayed or discussed mutual couplings or direct couplings or communication connections may be implemented via some interfaces. The indirect couplings or communication connections between the units may be implemented in electronic or other similar forms. These are all not limited in this application. In addition, the units or subunits described as separate parts may or may not be physically separate, may or may not be physical units, or may be distributed into a plurality of circuit units. Some or all of the units or subunits may be selected based on actual requirements to achieve the objectives of the solutions of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A dedicated host creation method, wherein the method is applied to a cloud management platform, and the method comprises:

   obtaining a first metric, wherein the first metric comprises a first delay between dedicated hosts in a first dedicated host cluster;
   obtaining a second delay, wherein the second delay comprises an actual delay between the dedicated hosts;
   generating a first condition based on the first delay and the second delay, wherein the first condition indicates a preset value relationship between the first delay and the second delay; and
   creating a second dedicated host cluster based on the first condition.

2. The method according to claim 1, wherein the first delay comprises a first average delay and a first maximum delay between the dedicated hosts, the second delay comprises a second average delay and a second maximum delay between the dedicated hosts, and generating the first condition based on the first delay and the second delay comprises:

   generating a second condition based on a preset value relationship between the first average delay and the second average delay;
   generating a third condition based on a preset value relationship between the first maximum delay and the second maximum delay; and
   combining the second condition and the third condition to generate the first condition.

3. The method according to claim 2, wherein obtaining the second delay comprises:

   obtaining a total quantity of the dedicated hosts and a delay between every two of the dedicated hosts;
   determining the second maximum delay based on the delay between every two of the dedicated hosts; and
   determining the second average delay based on the total quantity of the dedicated hosts and the delay between every two of the dedicated hosts.

4. The method according to claim 3, wherein determining the second maximum delay based on the delay between every two of the dedicated hosts comprises:
   determining a maximum delay value from the delay between every two of the dedicated hosts, and determining the maximum delay value as the second maximum delay.

5. The method according to claim 3 or 4, wherein determining the second average delay based on the total quantity of the dedicated hosts and the delay between every two of the dedicated hosts comprises:
   determining a quotient of a sum of the delay between every two of the dedicated hosts and the total quantity of the dedicated hosts as the second average delay.

6. The method according to any one of claims 1 to 5, wherein creating the second dedicated host cluster based on the first condition comprises:

determining, from the first dedicated host cluster, a dedicated host cluster that meets the first condition; and determining the dedicated host cluster that meets the first condition as the second dedicated host cluster.

7. The method according to claim 6, wherein determining, from the first dedicated host cluster, the dedicated host cluster that meets the first condition comprises:
for every two of the dedicated hosts in the first dedicated host cluster, if the first delay between the two dedicated hosts is greater than or equal to the second delay, determining the two dedicated hosts as the dedicated host cluster that meets the first condition.

8. The method according to any one of claims 1 to 7, wherein the first metric further comprises a service availability probability of the first dedicated host cluster, and the method further comprises:

    obtaining a second probability, wherein the second probability comprises a current actual service availability probability of the first dedicated host cluster;
    generating the second condition based on the first probability and the second probability, wherein the second condition indicates a preset value relationship between the first probability and the second probability; and
    creating a third dedicated host cluster based on the first condition and the second condition.

9. The method according to claim 8, wherein obtaining the second probability comprises:

    obtaining a third probability, wherein the third probability comprises a probability that a dedicated host cluster in a single fault domain is faulty;
    obtaining a fourth probability that a single host in the first dedicated host cluster is faulty; and
    obtaining the second probability based on the third probability and the fourth probability.

10. The method according to claim 8 or 9, wherein creating the third dedicated host cluster based on the first condition and the second condition comprises:

    determining, from the first dedicated host cluster, a dedicated host cluster that meets both the first condition and the second condition; and
    determining the dedicated host cluster that meets both the first condition and the second condition as the third dedicated host cluster.

11. The method according to any one of claims 1 to 10, wherein the first metric further comprises a first deployment requirement of a plurality of dedicated hosts in the first dedicated host cluster, the first deployment requirement indicates affinity and/or anti-affinity between the plurality of dedicated hosts, and before obtaining the second delay, the method further comprises:
determining node positions of the plurality of dedicated hosts in the first dedicated host cluster based on the first deployment requirement.

12. The method according to any one of claims 1 to 11, wherein the first metric further comprises a second deployment requirement of at least one fault domain to which the first dedicated host cluster belongs, the second deployment requirement indicates a quantity of and distribution in the at least one fault domain, and before obtaining the second delay, the method further comprises:
determining the quantity of the at least one fault domain and distribution of each dedicated host in the first dedicated host cluster in the at least one fault domain based on the second deployment requirement.

13. A dedicated host creation apparatus, wherein the apparatus is used in a cloud management platform, and the apparatus comprises:

    a first delay obtaining module, configured to obtain a first metric, wherein the first metric comprises a first delay between dedicated hosts in a first dedicated host cluster;
    a second delay obtaining module, configured to obtain a second delay, wherein the second delay comprises an actual delay between the dedicated hosts;
    a first condition generation module, configured to generate a first condition based on the first delay and the second delay, wherein the first condition indicates a preset value relationship between the first delay and the second delay; and
    a dedicated host creation module, configured to create a second dedicated host cluster based on the first condition.

14. The apparatus according to claim 13, wherein the first delay comprises a first average delay and a first maximum delay between the dedicated hosts, the second delay comprises a second average delay and a second maximum delay between the dedicated hosts, and the first condition generation module is specifically configured to:

generate a second condition based on a preset value relationship between the first average delay and the second average delay;
generate a third condition based on a preset value relationship between the first maximum delay and the second maximum delay; and
combine the second condition and the third condition to generate the first condition.

15. The apparatus according to claim 14, wherein the second delay obtaining module is specifically configured to:

obtain a total quantity of the dedicated hosts and a delay between every two of the dedicated hosts;
determine the second maximum delay based on the delay between every two of the dedicated hosts; and
determine the second average delay based on the total quantity of the dedicated hosts and the delay between every two of the dedicated hosts.

16. The apparatus according to claim 15, wherein determining the second maximum delay based on the delay between every two of the dedicated hosts comprises:
determining a maximum delay value from the delay between every two of the dedicated hosts, and determining the maximum delay value as the second maximum delay.

17. The apparatus according to claim 15 or 16, wherein determining the second average delay based on the total quantity of the dedicated hosts and the delay between every two of the dedicated hosts comprises:
determining a quotient of a sum of the delay between every two of the dedicated hosts and the total quantity of the dedicated hosts as the second average delay.

18. The apparatus according to any one of claims 13 to 17, wherein the dedicated host creation module is specifically configured to:

determine, from the first dedicated host cluster, a dedicated host cluster that meets the first condition; and
determine the dedicated host cluster that meets the first condition as the second dedicated host cluster.

19. The apparatus according to claim 18, wherein determining, from the first dedicated host cluster, the dedicated host cluster that meets the first condition comprises:
for every two of the dedicated hosts in the first dedicated host cluster, if the first delay between the two dedicated hosts is greater than or equal to the second delay, determining the two dedicated hosts as the dedicated host cluster that meets the first condition.

20. The apparatus according to any one of claims 13 to 19, wherein the first metric further comprises a service availability probability of the first dedicated host cluster, and the dedicated host creation module is further configured to:

obtain a second probability, wherein the second probability comprises a current actual service availability probability of the first dedicated host cluster;
generate the second condition based on the first probability and the second probability, wherein the second condition indicates a preset value relationship between the first probability and the second probability; and
create a third dedicated host cluster based on the first condition and the second condition.

21. The apparatus according to claim 20, wherein obtaining the second probability comprises:

obtaining a third probability, wherein the third probability comprises a probability that a dedicated host cluster in a single fault domain is faulty;
obtaining a fourth probability that a single host in the first dedicated host cluster is faulty; and
obtaining the second probability based on the third probability and the fourth probability.

22. The apparatus according to claim 20 or 21, wherein creating the third dedicated host cluster based on the first condition and the second condition comprises:

determining, from the first dedicated host cluster, a dedicated host cluster that meets both the first condition and the second condition; and

determining the dedicated host cluster that meets both the first condition and the second condition as the third dedicated host cluster.

23. The apparatus according to any one of claims 13 to 22, wherein the first metric further comprises a first deployment requirement of a plurality of dedicated hosts in the first dedicated host cluster, the first deployment requirement indicates affinity and/or anti-affinity between the plurality of dedicated hosts, and before obtaining the second delay, the second delay obtaining module is further configured to:
determine node positions of the plurality of dedicated hosts in the first dedicated host cluster based on the first deployment requirement.

24. The apparatus according to any one of claims 13 to 23, wherein the first metric further comprises a second deployment requirement of at least one fault domain to which the first dedicated host cluster belongs, the second deployment requirement indicates a quantity of and distribution in the at least one fault domain, and before obtaining the second delay, the second delay obtaining module is further configured to:
determine the quantity of the at least one fault domain and distribution of each dedicated host in the first dedicated host cluster in the at least one fault domain based on the second deployment requirement.

25. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 12.

26. A computer program product comprising instructions, wherein when the instructions are run by a computing device cluster, the computing device cluster is enabled to perform the method according to any one of claims 1 to 12.

27. A computer-readable storage medium, comprising computer program instructions, wherein when the computer program instructions are executed by a computing device cluster, the computing device cluster performs the method according to any one of claims 1 to 12.

FIG. 1a

Top of Rack     Middle of Rack     Bottom of Rack

Top of the rack

Middle of the rack

Bottom of the rack

FIG. 1b

FIG. 1c

FIG. 2

Server

Virtual machine 1

Application

Virtual machine
operating system

Virtual hardware

| Virtual memory | Virtual processor |

Virtual bus

| Virtual PCI device | Virtual disk |

...

Virtual machine 2

Application

Virtual machine
operating system

Virtual hardware

| Virtual memory | Virtual processor |

Virtual bus

| Virtual PCI device | Virtual disk |

Virtual machine manager

Host machine operating system

Software layer

Hardware layer

Memory

Processor

Bus

PCI device

Disk

FIG. 3

FIG. 4

Obtain a first metric, where the first metric includes a first delay between dedicated hosts in a first dedicated host cluster — 501

Obtain a second delay, where the second delay includes an actual delay between the dedicated hosts — 502

Generate a first condition based on the first delay and the second delay, where the first condition indicates a preset value relationship between the first delay and the second delay — 503

Create a second dedicated host cluster based on the first condition — 504

FIG. 5

| A cloud management platform receives a first deployment requirement and/or a second deployment requirement of a dedicated host that are/is entered by a user | 601a |

| The cloud management platform determines node positions of a plurality of dedicated hosts in a first dedicated host cluster based on the first deployment requirement | 601b |

| The cloud management platform determines a quantity of at least one fault domain and distribution of each dedicated host in the first dedicated host cluster in the at least one fault domain based on the second deployment requirement | 601c |

| The cloud management platform obtains a first delay | 601 |

| The cloud management platform obtains a second delay | 602 |

| The cloud management platform generates a first condition based on the first delay and the second delay | 603 |

| The cloud management platform creates a second dedicated host cluster based on the first condition | 604 |

| The cloud management platform obtains a service availability probability of the first dedicated host cluster | 605 |

| The cloud management platform obtains a second probability | 606 |

| The cloud management platform generates a second condition based on a first probability and the second probability | 607 |

| The cloud management platform creates a third dedicated host cluster based on the first condition and the second condition | 608 |

FIG. 6

A cloud management platform receives a first deployment requirement and/or a second deployment requirement of a dedicated host that are/is entered by a user — 701a

↓

The cloud management platform determines node positions of a plurality of dedicated hosts in a first dedicated host cluster based on the first deployment requirement — 701b

↓

The cloud management platform determines a quantity of at least one fault domain and distribution of each dedicated host in the first dedicated host cluster in the at least one fault domain based on the second deployment requirement — 701c

↓

The cloud management platform obtains a first delay — 701

↓

The cloud management platform obtains a second delay — 702

↓

The cloud management platform generates a first condition based on the first delay and the second delay — 703

↓

⟨ The cloud management platform determines whether a second dedicated host cluster is successfully created based on the first condition ⟩ — 704

No → TO FIG. 7B

Yes → TO FIG. 7B

FIG. 7A

CONT.
FROM
FIG. 7A

Return creation failure information 705

The cloud management platform obtains a service availability probability of the first dedicated host cluster 706

The cloud management platform obtains a second probability 707

The cloud management platform generates a second condition based on a first probability and the second probability 708

The cloud management platform determines whether a third dedicated host cluster is successfully created based on the second condition 709

No

Return creation failure information, and end the operation 710

CONT.
FROM
FIG. 7A

The cloud management platform obtains a service availability probability of the first dedicated host cluster 706

The cloud management platform obtains a second probability 707

The cloud management platform generates a second condition based on a first probability and the second probability 708

The cloud management platform determines whether a third dedicated host cluster is successfully created based on the second condition 711

No

Return creation failure information, and end the operation 712

FIG. 7B

Dedicated host creation apparatus 8000

First delay obtaining module 8001

Second delay obtaining module 8002

First condition generation module 8003

Dedicated host creation module 8004

FIG. 8

9000

Sensor software change apparatus

9001

9005

Processor

CPU 0

CPU 1

Processor

CPU 0

CPU 1

9003

Memory

Program code

Communication bus 9002

9004

Communication interface

FIG. 9

Processor
1004

Communication
interface 1008

Bus 1002

Memory 1006

First delay
obtaining
module 8001

Second delay
obtaining
module 8002

First condition
generation
module 8003

Dedicated host
creation module
8004

Computing device 1000

FIG. 10

Memory

FIG. 11

FIG. 12

| Computing device 1000C | | |
|---|---|---|
| Processor 1004 | | Communication interface 1008 |
| Bus 1002 | | |
| | Memory 1006 | |
| | First delay obtaining module 8001 | Second delay obtaining module 8002 |

Network

| Computing device 1000D | | |
|---|---|---|
| Communication interface 1008 | | Processor 1004 |
| Bus 1002 | | |
| | Memory 1006 | |
| | First condition generation module 8003 | Dedicated host creation module 8004 |

FIG. 13

## INTERNATIONAL SEARCH REPORT

| International application No. |
| --- |
| **PCT/CN2024/074443** |

**A.    CLASSIFICATION OF SUBJECT MATTER**

H04L41/0803(2022.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, VEN, CNKI: 创建, 选, 满足, 筛选, 删, 实际, 真实, 当前, 集群, 间, 时延, 延迟, 延时, 专属, 专用, 主机, DEH, dedicated host, time delay, cluster

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111669444 A (NANJING TECH UNIVERSITY) 15 September 2020 (2020-09-15) description, paragraph [0066] | 1-27 |
| A | CN 104011685 A (HUAWEI TECHNOLOGIES CO., LTD.) 27 August 2014 (2014-08-27) entire document | 1-27 |
| A | CN 113625945 A (JINAN INSPUR DATA TECHNOLOGY CO., LTD.) 09 November 2021 (2021-11-09) entire document | 1-27 |
| A | CN 114090187 A (LENOVO (BEIJING) CO., LTD.) 25 February 2022 (2022-02-25) entire document | 1-27 |
| A | CN 114915633 A (ALIBABA CLOUD COMPUTING LTD.) 16 August 2022 (2022-08-16) entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 April 2024** | **17 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/074443**

| Patent document cited in search report | | | Publication date (day/month/year) | Patent family member(s) | | | Publication date (day/month/year) |
|---|---|---|---|---|---|---|---|
| CN | 111669444 | A | 15 September 2020 | None | | | |
| CN | 104011685 | A | 27 August 2014 | US | 2014344810 | A1 | 20 November 2014 |
| | | | | US | 9367340 | B2 | 14 June 2016 |
| | | | | WO | 2014101010 | A1 | 03 July 2014 |
| | | | | US | 2015324232 | A1 | 12 November 2015 |
| | | | | US | 9405563 | B2 | 02 August 2016 |
| | | | | EP | 2775399 | A1 | 10 September 2014 |
| | | | | EP | 2775399 | A4 | 29 April 2015 |
| CN | 113625945 | A | 09 November 2021 | None | | | |
| CN | 114090187 | A | 25 February 2022 | None | | | |
| CN | 114915633 | A | 16 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310064174